# EUROPÄISCHE PATENTSCHRIFT

(11) **EP 1 259 322 B1**
(45) Veröffentlichungstag und Bekanntmachung des Hinweises auf die Patenterteilung: **02.08.2006**
(21) Anmeldenummer: 01903780.3
(22) Anmeldetag: 16.02.2001
(51) Int. Cl.: B01J 41/14, B01J 41/20, C12N 15/10

(54) **POLYMERE ANIONENAUSTAUSCHERHARZE UND DEREN VERWENDUNG IN CHROMATOGRAPHISCHEN VERFAHREN**
POLYMERIC ANION EXCHANGER RESINS AND THEIR USE IN CHROMATOGRAPHIC METHODS
RESINES POLYMERES ECHANGEUSES D'ANIONS ET LEUR UTILISATION DANS DES PROCEDES CHROMATOGRAPHIQUES

(30) Priorität: 03.03.2000 DE 10009982
(43) Veröffentlichungstag der Anmeldung: 27.11.2002
(73) Patentinhaber: QIAGEN GmbH, 40724 Hilden (DE)
(72) Erfinder: ERBACHER, Christoph, 42781 Haan (DE)
(74) Vertreter: Zimmermann & Partner
(86) Internationale Anmeldenummer: PCT/EP2001/001791
(87) Internationale Veröffentlichungsnummer: WO 2001/064342

(56) Entgegenhaltungen:
- EP-A- 0 282 177
- WO-A-00/05358
- US-A- 3 957 741
- US-A- 4 052 343
- US-A- 4 139 684
- US-A- 5 334 310
- DATABASE WPI Section Ch, Week 199515 Derwent Publications Ltd., London, GB; Class A14, AN 1995-109372 XP002147855 & JP 07 000830 A (ROHM & HAAS CO), 6. Januar 1995 (1995-01-06)
- PATENT ABSTRACTS OF JAPAN vol. 008, no. 283 (C-258), 25. Dezember 1984 (1984-12-25) & JP 59 152397 A (MITSUBISHI KASEI KOGYO KK), 31. August 1984 (1984-08-31)
- SYKORA D ET AL: "Separation of oligonucleotides on novel monolithic columns with ion-exchange functional surfaces" JOURNAL OF CHROMATOGRAPHY A,NL,ELSEVIER SCIENCE, Bd. 852, Nr. 1, 6. August 1999 (1999-08-06), Seiten 297-304, XP004176693 ISSN: 0021-9673
- GIOVANNINI R ET AL: "HIGH-PERFORMANCE MEMBRANE CHROMATOGRAPHY OF SUPERCOILED PLASMID DNA" ANALYTICAL CHEMISTRY,US,AMERICAN CHEMICAL SOCIETY. COLUMBUS, Bd. 70, Nr. 16, 15. August 1998 (1998-08-15), Seiten 3348-3354, XP000867169 ISSN: 0003-2700
- SVEC F ET AL: "MOLDED RIGID MONOLITHIC POROUS POLYMERS: AN INEXPENSIVE, EFFICIENT,AND VERSATILE ALTERNATIVE TO BEADS FOR THE DESIGN OF MATERIAL FOR NUMEROUS APPLICATIONS" INDUSTRIAL & ENGINEERING CHEMISTRY RESEARCH,US,AMERICAN CHEMICAL SOCIETY. WASHINGTON, Bd. 38, Nr. 1, 1999, Seiten 34-48, XP000788228 ISSN: 0888-5885
- HENNINGER H -P ET AL: "PURIFICATION AND QUANTITATIVE ANALYSIS OF NUCLEIC ACIDS BY ANION-EXCHANGE HIGH-PERFORMANCE LIQUID CHROMATOGRAPHY" BIOLOGICAL CHEMISTRY HOPPE-SEYLER,DE,WALTER DE GRUYTER, BERLIN, Bd. 374, Nr. 8, 1. August 1993 (1993-08-01), Seiten 625-634, XP000675214 ISSN: 0177-3593

## Beschreibung

Die vorliegende Erfindung betrifft ein Anionenaustauscherharz, dessen Verwendung als polymerer Anionenaustauscher in chromatographischen Verfahren, insbesondere zur Reinigung und Isolierung von Nukleinsäuren, sowie ein chromatographisches Verfahren, insbesondere zur Reinigung und Isolierung von Nukleinsäuren. Die Erfindung betrifft ferner ein Verfahren zur Herstellung des Anionenaustauscherharzes.

In der Chemie, Biochemie, molekularbiologie und Polymerforschung bzw. bei deren Anwendung in Technik, Medizin, Pharmazie und Gentechnologie haben sich chromatographische Verfahren zur Isolierung, Trennung und Analyse von molekularen Spezies, wie z.B. Makromolekülen, etabliert.

Von der Vielzahl der verschiedenen bekannten chromatographischen Verfahren ist die Ionenaustauschchromatographie von besonderer Bedeutung für die Reinigung und Isolierung von Ladungszentren aufweisenden, molekularen Spezies, wie z.B. Ionen, Proteinen oder anderen Biopolymeren. In den Biowissenschaften und in der Medizin stellt die Reinigung und Isolierung von hochmolekularen Nukleinsäuren einen Schlüsselschritt zur Lösung zahlreicher präparativer und analytischer Probleme dar. Neben der Gelpermeationschromatographie (GPC) und der Reverse-Phase Chromatographie (RPC) kommt dort insbesondere die Ionenaustauschchromatographie zum Einsatz. Diese kann besonders erfolgreich zur Trennung komplexer Gemische verschiedener Nukleinsäuren verwendet werden, wie sie z.B. in Bakterienlysaten oder anderen biologischen Proben vorkommen.

Häufig weisen die aus dem Stand der Technik bekannten Ionenaustauschermaterialien, wie z.B. Polymerharze auf Polyacrylatbasis, nur eine geringe Selektivität bezüglich der verschiedenen Nukleinsäure-Spezies auf. Dies hat zur Folge, dass die zu isolierende Nukleinsäure, wie z.B. p-DNA, durch andere Nukleinsäuren, wie z.B. RNA, kontaminiert sein kann. Dadurch werden aufwendige Vor- oder Nachbehandlungsschritte notwendig, um die Nukleinsäure-Spezies in hoch reiner Form zu gewinnen. Solche zusätzlichen Behandlungsschritte können z.B. weitere chromatographische Schritte, Fällungsschritte, Extraktionsschritte oder ein enzymatischer Abbau sein. Diese Schritte sind zeitaufwendig, kostenintensiv und verwenden oftmals toxische bzw. cancerogene Chemikalien. Darüber hinaus verkomplizieren sie das Reinigungsverfahren weiter, wodurch die Automatisierung in einem Analyse- oder Darstellungsverfahren erschwert wird.

Von besonderem Interesse ist in der Gentechnologie die Bereitstellung hoch reiner Vektoren, wie z.B. Plasmid-DNA (p-DNA). Dazu ist es erforderlich, die p-DNA möglichst selektiv von den restlichen Zellbestandteilen, insbesondere Proteinen, Oligonukleotiden, beispielsweise tRNA, rRNA und Phagen-DNA abzutrennen.
In WO 99/16869 ist ein Verfahren zur Reinigung von Plasmid-DNA beschrieben. Dieses Verfahren umfaßt einen Fällungsschritt, in dem RNA und chromosomale DNA mittels eines divalenten Erdalkalimetallions aus dem Lysat abgetrennt werden, bevor das so gereinigte Lysat auf eine Anionenaustauschermatrix aufgebracht wird.

Ein weiterer Nachteil vieler aus dem Stand der Technik bekannter Ionenaustauschermaterialien, insbesondere von Polymerharzen auf Polystyrolbasis, ist, dass sie einzelsträngige Nukleinsäuren stärker binden als doppelsträngige, zirkuläre Formen. Da p-DNA in der Regel in der doppelsträngigen, zirkulären Form vorliegt, sind diese Materialien zur Isolierung von p-DNA nicht geeignet, da die Bindekapazität des Ionenaustauschermaterials durch die unerwünschten, in der Regel im Überschuß vorhandenen einzelsträngigen Nukleinsäuren, insbesondere RNA, blockiert wird.

Häufig weisen herkömmliche Ionenaustauschermaterialien nur eine relativ geringe Nukleinsäure-Bindekapazität bezüglich der zu isolierenden Nukleinsäure-Spezies auf. Diese geringe Bindekapazität bedingt, dass ein relativ großes Chromatographiesäulen-Volumen zur präparativen Trennung einer definierten Nukleinsäuremenge erforderlich ist. Dadurch erhöht sich der Zeit- und Materialbedarf der einzelnen chromatographischen Prozessstufen, wie z.B. das Equilibrieren oder Waschen der Säule und die Elution der Nukleinsäure.

WO 97/29825 beschreibt eine chromatographische Trennmethode für Peptide und Nukleinsäuren, bei der ein schwaches Anionenaustauschermaterial verwendet wird. Durch die spezielle Konstitution der Austauscherliganden wird eine starke Wechselwirkung zwischen den Liganden und den Peptiden bzw. Nukleinsäuren erreicht. Die Trennmethode wird bevorzugt zur Reinigung und Isolierung von Oligonucleotiden eingesetzt, die weniger als 200 Basen und Basenpaare aufweisen. Die Reinigung und Isolierung von höhermolekularen Nukleinsäuren wird nicht gezeigt.

Ein weiterer Nachteil herkömmlicher Chromatographiematerialen besteht darin, daß diese oftmals nur für ein spezielles chromatographisches Verfahren eingesetzt werden können. So weisen z.B. viele Chromatographiematerialien eine zu geringe Druckstabilität auf, um in der Hochdruckflüssigkeitschromatographie (HPLC) Anwendung zu finden. S. Xie et al. (J. Polym. Sci. A: Polym. Chem 35, 1013-1021, 1997) beschreiben die Herstellung poröser, hydrophiler Monolithe auf Basis von Polyacrylamid zum Einsatz in HPLC-Verfahren. Polyacrylamid wird bisher vor allem zur elektrophoretischen Trennung oder Gelfiltration von Biopolymeren eingesetzt. Durch die Copolymerisation von Acrylamid mit N,N'-Ethylen-bis-acrylamid in Gegenwart von höheren aliphatischen Alkoholen und Polyethylenglycolen erhält man Monolithe, die Poren mit einem Porendurchmesser von über 1000 nm aufweisen. Dadurch wird eine ausreichende Flüssigkeitsdurchlässigkeit des Monolithen ermöglicht. Als hypothetischer Anwendungsbereich wird die Trennung biologischer Polymere, Festphasenextraktionen oder die Immobilisierung von Proteinen genannt, ohne weiter darauf einzugehen oder dies experimentell zu belegen.

Materialbedingt können herkömmliche Ionenaustauschermaterialien u. U. nur in Form von Partikeln dargestellt werden. Dies verhindert ihre Verwendung in anderer Form, z.B. als Membranen, monolithische Säulen oder als Beschichtungen von Trägermaterialien.

Ein weiteres Problem, das bei herkömmlichen Ionenaustauschermaterialien auftreten kann, ist eine mangelnde Säure- bzw. Basenstabilität. Eine solche mangelnde Stabilität wird dann gefunden, wenn das Material hydrolytisch relativ instabile Bindungtypen, wie z.B. Siloxanbindungen, aufweist. Säure- bzw. Basenstabilität des Materials ist immer dann wichtig, wenn große Mengen Chromatographiematerial zur Reinigung und Isolierung eingesetzt werden müssen. Dies ist insbesondere bei präparativen Verfahren, wie z.B. der Plasmidproduktion, der Fall. Vor einer Wiederverwendung muß das Chromatographiematerial durch Waschen mit Laugen oder Säuren gründlich gereinigt werden, ohne dass das Material dabei Schaden nimmt. Die Möglichkeit zur Wiederverwendung trägt wesentlich zur Kostenreduktion bei, da das Leeren und Wiederbefüllen großvolumiger Chromatographiesäulen kostspielig und zeitaufwendig ist.

JP-A-7 000830 beschreibt ein Anionenaustauscherharz auf Acrylatbasis, das durch die Polymerisation zumindest eines wasserlöslichen Methacrylamid-Monomers, vorzugsweise Dimethylaminoalkylmethacrylamid, oder zumindest eines wasserlöslichen MethacrylatMonomers, vorzugsweise einem Dimethylaminoalkylmethacryl-Momomer, gewonnen wird. Als Vernetzer kommt Trimethylolpropantriacrylat zum Einsatz .

US-A-4139684 beschreibt eine Methode zur Herstellung eines hydrophilen, polymeren lonenaustauschermaterials. Dieses Verfahren umfasst eine ternäre Copolymerisation, die z.B. in einer wässrigen Alkohollösung in Gegenwart von Polyvinylpyrrolidon und Dodecylalkohol radikalisch (AIBN) bei 80°C bei einer Reaktionsdauer von 12 h durchgeführt werden kann. Als erster Typ Monomere werden hydrophile Monomere mit nicht ionogenen Gruppen, umfassend funktionale Hydroxyl- oder Amid-Gruppen, beschrieben. Als hydrophile Monomere sind Hydroxyalkylacrylate bzw. -methacrylate, Polyglykolacrylate, Polyglykol-methacrylate und N-substituierte Acrytamide oder Methacrylamide. Als zweite Monomerspezies werden Monomere mit ionogenen Gruppen verwendet. Diese können Amino- oder Dialkylaminoalkyl-Acrylate oder Methacrylate bzw. Amino- oder Dialkylaminoalkyl-Acrylamide oder -Methacrylamide sein. Als dritte Monomerspezies wird ein Vernetzer aus der Gruppe der Alkylendiacrylate bzw. -methacrylate, Oligo- bzw. Polyglycoldiacrylate bzw. -methacrylate und Alkylenbisacrylamide bzw. -methacrylamide verwendet. Gemäß dem vorliegenden Verfahren ist es obligatorisch, dass alle 3 verschiedenen Monomerspezies copolymerisiert werden.

US-A-4052343 beschreibt ein Verfahren zur Herstellung eines vernetzen, makroretikularen lonenaustauscher-Polymers auf Dimethylaminoethylmethacrylat-Basis. Dazu wird Dimethylaminoethylmethacrylat in Gegenwart eines mehrfach ungesättigten Vernetzers, beispielsweise Ethylenglykoldiacrylat, Ethylenglykoldimethacrylat, N,N'-Methylendiacrylamid, N,N'-Methylendimethacrylamid und N,N'-Ethylendiacrylamid polymerisiert. Die Polymerisation kann radikalisch (AIBN) als Suspensionspolymerisation in einem wässrigen Medium bei 60 bis 80°C und mit einer Reaktionsdauer von 12 durchgeführt werden. In dem beschriebenen Verfahren wird ein chemisch inertes Trialkylamin als Phasenverdünner eingesetzt.

EP-A-282177 beschreibt ein Anionenaustauscherharz mit einer äußeren Acrylharzschicht. Das Acrylharz umfasst ein Copolymer-Grundgerüst aus einem hydrophilen, funktionalen Acrylmonomer und einem hydrophilen, diethylenisch-ungesättigten Vernetzer-Monomer. Als Acrylmonomer kann Dimethyl-aminoethylmethacrylat oder Diethylaminoethylmethacrylat verwendet werden. Als Vernetzer-Monomer werden Ethylenglykoldiacrylat, Ethylenglykoldimethacrylat, Diethylenglykoldiacrylat, Triethylenglykoldiacrylat, Triethylenglykoldimethacrylat, Polyethylenglykol-dimethacrylat oder Glyceryltrimethacrylat genannt.

US-A-3957741 beschreibt vernetzte, poröse Polyacrylatkömchen. Diese Polyacrylate bestehen aus einem Polymer aus einem vemetzen Amino-, Dialkylamino- bzw. Hydroxyalkylenmethacrylat-Monomer und einem Vernetzer-Monomer. Als Methacrylat-Monomer wird Dimethylaminomethylacrylat, als Vernetzer-Monomer werden Ethylendimethacrylat und N,N'-methylen-bis-acrylamid genannt.

Daher ist es Aufgabe der vorliegenden Erfindung ein Anionenaustauschermaterial, insbesondere zur Verwendung in einem chromatographischen Verfahren, bereitzustellen, das die oben beschriebenen Nachteile deutlich vermindert bzw. ganz vermeidet. Insbesondere ist es die Aufgabe, ein Anionaustauschermaterial zur Reinigung und Isolierung von Nukleinsäuren bereitzustellen, das eine hohe Selektivität und Bindekapazität bezüglich einzelner Nukleinsäurespezies aufweist, insbesondere bezüglich p-DNA.

Diese Aufgabe löst die Erfindung durch das in dem unabhängigen Anspruch 1 angegebene Anionenaustauscherharz, durch die im Anspruch 18 angegebene Verwendung eines Anionenaustauscherharzes in einem chromatographischen Verfahren, und durch das in dem unabhängigen Anspruch 23 angegebene Verfahren zur Herstellung eines Anionenaustauscherharzes.

Die Aufgabe wird erfindungsgemäß gelöst durch die Bereitstellung eines Anionenaustauscherharzes, wobei das Anionenaustauscherharz erhältlich ist durch Polymerisation von mindestens einem Acrylsäurederivat mit mindestens einem Vernetzer gemäß Anspruch 1.

Das Acrylsäurederivat hat die allgemeine Formel (I) :

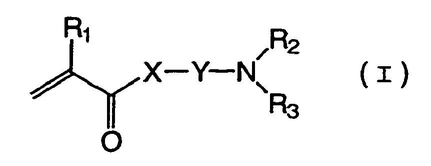

Dabei bezeichnet in der Formel (I) R₁ Wasserstoff, eine Methyl- oder Ethylgruppe, und R₂ und R₃ bezeichnen unabhängig voneinander Wasserstoff, einen C₁-C₃-Alkylrest oder einen hydroxyl-substituierten C₁-C₃-Alkylrest. X bezeichnet Sauerstoff, eine -(NH)-Gruppe oder eine -(NR₄)-Gruppe, und R₄ bezeichnet einen C₁-C₃-Alkylrest. Das Acrylsäurederivat kann somit aus der Gruppe der Acrylsäureester- oder Acrylsäureamidderivate ausgewählt sein. Y bezeichnet eine Gruppe (CH₂)ₘ-(CH₂O)ₙ-, wobei m,n unabhängig voneinander eine ganze Zahl 0, 1, 2, 3, 4, 5 oder 6 bedeuten, m + n > 0 ist und einer oder beide der Wasserstoffe der Gruppe Y durch einen C₁-C₃-Alkylrest oder ein Acrylsäurederivat der allgemeinen Formel (II) ersetzt sein kann:

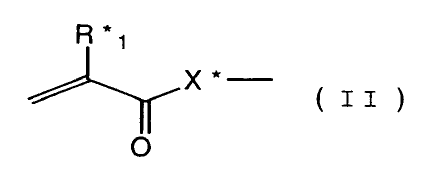

In der allgemeinen Formel (II) bezeichnet R*₁ Wasserstoff, eine Methyl- oder Ethylgruppe, und X* Sauerstoff oder eine -(NH)-Gruppe. Die durch die Formel (II) bezeichnete Gruppe ist somit ebenfalls aus der Gruppe der Acrlysäureester oder Acrylsäureamide, bzw. deren Derivate, ausgewählt.

Der bei der Polymerisation eingesetzte Vernetzer wird durch die allgemeine Formel (III) beschrieben:

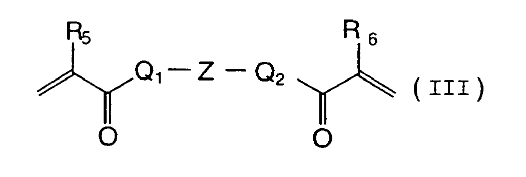

Dabei bezeichnen R₅, R₆ unabhängig voneinander Wasserstoff, eine Methyl- oder Ethylgruppe. Q₁ und Q₂ unabhängig voneinander Sauerstoff oder eine -(NH)-Gruppe.
Z bezeichnet eine {[(CH₂)ₒ]-O}ₚ-(CH₂)_{q} Gruppe, wobei o, p und q unabhängig voneinander eine ganze Zahl 0, 1, 2 oder 3 bedeuten, o + p + q > 0 gilt, und
mindestens eine der Wasserstoffgruppen in der Gruppe Z unabhängig voneinander durch einen C₁-C₃-Alkylrest oder einen -[(CH₂)ᵣ-O]ₛ-(CH₂)ₜ-NR₈R₉ Rest ausgetauscht sein kann, wobei r, s und t unabhängig voneinander die ganze Zahl 0, 1, 2, 3, 4, 5 oder 6 bedeutet, r + s + t > 0 ist, und R₈, R₉ unabhängig voneinander Wasserstoff, einen C₁-C₃-Alkylrest oder einen hydroxyl-substituierten C₁-C₃-Alkylrest bezeichnet.
Ein C₁-C₃-Alkylrest bedeutet im Sinne der vorliegenden Erfindung eine Methyl-, Ethyl-, n-Propyl- oder Isopropylgruppe.
Die so erhältlichen Polymere stellen schwache Anionenaustauscher dar, in denen die tertiären Aminogruppen, die bei pH-Werten unterhalb ihres pK_{b}-Wertes im Wesentlichen in protonierter Form vorliegen, als Anionenaustauschergruppen fungieren können.
Die Reinigung und Isolierung bestimmter molekularer Spezies, z.B. einer bestimmten Nukleinsäure-Spezies, aus einer komplexen Mischung findet dadurch statt, dass die verschiedenen Komponenten der Mischung mit den Anionenaustauschergruppen in Wechselwirkung treten und dass die jeweilige Interaktion der verschiedenen Komponenten, also der verschiedenen molekularen Spezies, unterschiedlich stark ist. Durch diese Trennwirkung können z.B. eine oder mehrere Nukleinsäure-Spezies, wie z.B. E.coli Proteine, Oligonucleotide, tRNA, rRNA, Phagen-DNA und/oder Plasmid-DNA (pDNA) aus einer mehr oder weniger komplexen Mischung von Substanzen isoliert werden.
Dies wird in einer besonders bevorzugten Ausführungsform der Erfindung genutzt, in der das Anionenaustauscherharz in einem chromatographischen Verfahren verwendet wird, durch das Nukleinsäuren aus einem Nukleinsäure-haltigen Gemisch getrennt, isoliert, analysiert und/oder gereinigt werden.

Besonders bevorzugt ist dabei die Trennung bzw. Isolierung oder Reinigung von hochmolekularen Nukleinsäure-Spezies, insbesondere von Plasmid-DNA. Die Trennwirkung des Anionenaustauscherharzes ermöglicht dessen erfindungsgemäße Verwendung in Reinigungsverfahren, analytischen Verfahren und/oder präparativen Verfahren.
In einer bevorzugten, erfindungsgemäßen Verwendung wird das Anionenaustauscherharz in einem automatisierten Reinigungsverfahren und/oder Isolierungsverfahren und/oder Analyseverfahren verwendet.

Das erfindungsgemäß verwendete Anionenaustauschermaterial weist eine hohe Säure- und Basenstabilität auf, ist somit wiederverwendbar und ermöglicht das Waschen des Materials in der chromatographischen Säule ("Cleaning in Place").
In einer weiteren bevorzugten Ausführungsform ist das verwendete Anionenaustauscherharz durch eine radikalische Polymerisation, insbesondere durch eine radikalische Copolymerisationsreaktion, erhältlich. Bei einer solchen Reaktionsführung werden bevorzugt Radikalstarter, wie z.B. Benzoylperoxid, Azoisobutyronitril (AIBN) und/oder Ammoniumperoxodisulfat eingesetzt. Neben der bevorzugten radikalischen Polymerisation bzw. Copolymerisation sind aber auch weitere Reaktionsführungen möglich, wie z.B. anionische oder kationische oder auch koordinative Polymerisation. Die Polymerisation selbst kann dabei u. a. auf der Basis einer Suspensions- bzw. Emulsionspolymerisation durchgeführt werden.
Als Lösungsmittel eignen sich die aus dem Stand der Technik für derartige Polymerisationsreaktionen bekannten Lösungsmittel.
Als Lösungsmittel für die radikalische Polymerisation können protische oder aprotische Lösungsmittel eingesetzt werden, insbesondere Wasser, Methanol, Ethanol, Propanol, iso-Propanol, Ethylenglycol, Ethylenglycol-monoalkylether, Glycerin, Dimethylformamid und/oder Dimethylsulfoxid.
In einer besonders bevorzugten erfindungsgemäßen Ausführungsform ist das verwendete Anionenaustauscherharz dadurch erhältlich, dass die Polymerisation zusätzlich in Gegenwart eines Porenbildners durchgeführt wird. Durch die Verwendung eines Porenbildners weist das erhaltene Anionenaustauscherharz Poren auf, welche die für die Bindung oder Adsorption zur Verfügung stehende Oberfläche des Harzes vergrößern und die Trennleistung erhöhen.
In einer weiteren, bevorzugten Ausführungsform der Erfindung enthält das Reaktionsgemisch, aus dem das Anionenaustauscherharz erhalten wird zwischen 0,1 bis 100, bevorzugt zwischen 0,1 bis 75, insbesondere bevorzugt zwischen 4,0 bis 20 und ganz besonders bevorzugt 16,5 Gew.-% Acrylsäurederivat; zwischen 0 bis 95, bevorzugt zwischen 0 bis 75, insbesondere bevorzugt zwischen 10 bis 23 und ganz besonders bevorzugt 13,5 Gew.-% Vernetzer; zwischen 0 bis 75, bevorzugt zwischen 0 bis 60, insbesondere bevorzugt 3 bis 60 und ganz besonders bevorzugt 49 Gew.-% Lösungsmittel. Optional enthält das Reaktionsgemisch zusätzlich zwischen 0 bis 75, bevorzugt zwischen 0 bis 50, insbesondere bevorzugt 3 bis 35 und ganz besonders bevorzugt 21 Gew-% Porenbildner. In jedem Fall summieren sich die Bestandteile des Reaktionsgemisches zu 100 Gew-%.

Die selektive chromatographische Trennleistung der erfindungsgemäßen Anionenaustauscherharze wird durch die Wahl geeigneter Puffersysteme bzw. Elutionsmittel erreicht. Bevorzugt werden für die Trennung und Isolierung verschiedener Nukleinsäurespezies Ionen enthaltende Puffersysteme bzw. Elutionsmittel verwendet, die eine Leitfähigkeit von 0 bis 120 mS/cm besitzen.
Unter Leitfähigkeit soll in der vorliegenden Erfindung die Fähigkeit von Ionen verstanden werden, unter dem Einfluss eines elektrischen Feldes zu wandern. Kationen bewegen sich dabei in Richtung der negativ geladenen Elektrode, Anionen in Richtung der positiv geladenen Elektrode.

Die Leitfähigkeit einer Ionen enthaltenden Lösung hängt ganz allgemein von der Anzahl der in der Lösung vorhandenen Ionen, von deren Ladung und der Temperatur der Lösung ab. Einheit der Leitfähigkeit ist [S/m].
In einer bevorzugten Ausführungsform werden zur Chromatographischen Trennung von Nukleinsäurespezies als Elutionsmittel Lösungen von Salzen anorganischer Säuren eingesetzt. Besonders bevorzugt werden Salze deren Anionen aus der Gruppe der Halogenide; Nitrate; Sulfate; etc. und deren Kationen aus der Gruppe der Alkali-, Erdalkali- oder Ammoniumionen ausgewählt sind.
Weiterhin sind alle anderen, hier nicht explizit erwähnten Ionenlösungen als Elutionsmittel geeignet, deren Leitfähigkeit in dem oben genannten Bereich liegt.

Weiterhin weisen die erfindungsgemäßen Anionenaustauscher eine hohe Nukleinsäure-Bindekapazität auf und ermöglichen somit eine Reduktion der zur Reinigung und Isolierung benötigten Menge des Harzes, sowie des Volumens der verwendeten Chromatographiesäule. Dadurch werden die chromatographischen Prozessstufen, wie Equilibrierung der Säule, Waschen der Säule und Elution der Nukleinsäure-Spezies zeitlich um einen äquivalenten Faktor verkürzt. Im Vergleich zu Anionenaustauschern auf Silica-Basis kann eine Volumenverringerung der Chromatographiesäule um den Faktor 4 bis 10 erreicht werden.
In einer weiteren bevorzugten Ausführungsform der vorliegenden Erfindung wird ein Anionenaustauscherharz verwendet, wobei in der Formel (I) X eine -(NH)-Gruppe oder eine - (NR₄) -Gruppe bezeichnet, wobei R₄ ein C₁-C₃-Alkylrest ist und somit das bei der Polymerisation eingesetzte Acrylsäurederivat ein Acrylsäureamid ist. Bevorzugt wird der Vernetzer der allgemeinen Formel (III)verwendet, wobei Q₁ und/oder Q₂ Sauerstoff bezeichnet. Die so erhältlichen Anionenaustauschermaterialien weisen die folgende Elutionsreihenfolge mit ansteigender Leitfähigkeit des Elutionsmittel auf: E.coli Proteine, Oligonucleotide (bis 18-mere), tRNA, rRNA, Phagen-DNA und pDNA werden, in der genannten Reihenfolge, sukzessive von dem Anionenaustauscherharz desorbiert.
In einer besonders bevorzugten Ausführungsform der Erfindung wird das Anionenaustauscherharz zur Isolierung von pDNA eingesetzt, besonders bevorzugt zur Isolierung von pDNA aus E.coli Lysaten. RNA kommt im Vergleich zu pDNA in einem 10 bis 50 fachen Überschuß in E.coli vor. Dies würde bei einer bevorzugten, d.h. stärkere Adsorption von RNA im Vergleich zu DNA an das Anionenaustauscherharz dazu führen, dass pDNA Ausbeuteverluste eintreten würden, wenn die Kapazitätsgrenze des Polymers erreicht wird. In diesem Fall würden die Anionenaustauschergruppen des Polymers durch eine bevorzugte Wechselwirkung mit der im Überschuß vorhandenen RNA blockiert und stünden zur Adsorption von pDNA nicht mehr zur Verfügung.
Die erfindungsgemäß verwendeten Anionenaustauscherharze bieten somit die Möglichkeit, die schwächer an die Anionenaustauschergruppen gebundenen Komponenten der aufgebrachten Probe, wie z.B. Proteine, Oligonucleotide oder RNA, mit nur minimalen apparativen Aufwand, z.B. durch einen Konzentration- bzw. Leitfähigkeit- Stufengradient im Elutionsmittel zu entfernen, der so zu wählen ist, dass die zu isolierende pDNA zunächst gebunden bleibt. Dadurch wird die Bindekapazität des Anionenaustauscherharzes bezüglich der am stärksten gebundenen und zu isolierenden Nukleinsäure-Spezies, z.B. pDNA, optimal genutzt. Die Elution der zu isolierenden Spezies kann dann z.B. durch Erhöhung der Ionenkonzentration und damit der Leitfähigkeit im Elutionsmittel bewerkstelligt werden.

In einer weiteren bevorzugten Ausführungsform der Erfindung ist das bei der Polymerisation eingesetzte Acrylsäurederivat ausgesucht aus der Gruppe bestehend aus
N-[3-(N,N-Dimethylamino)propyl]methacrylamid,
N-[3-(N,N-Diethylamino)propyl]methacrylamid,
N-[2-(N,N-Dimethylamino)ethyl]methacrylamid,
N-[2-(N, N-Diethylamino)ethyl]methacrylamid. Besonders bevorzugt wird N-[3-(N,N-Dimethylamino)propyl]methacrylamid als Acrylsäurederivat eingesetzt.

In einer alternativen bevorzugten Ausführungsform der Erfindung ist das bei der Polymerisation verwendete Acrylsäurederivat ausgesucht aus der Gruppe bestehend aus 2-Aminoethylmethacrylat, 2-(N,N-Dimethylamino)ethylacrylat, 2-(N,N-Dimethylamino)ethylmethacrylat und 3-(Dimethylamino) neopentylmethacrylat.

In einer weiteren besonders bevorzugten Ausführungsform der vorliegenden Erfindung werden als Vernetzer Alkylidenglycoldiacrylate oder Dialkylidenglycoldiacrylate eingesetzt, insbesondere Vernetzer ausgesucht aus der Gruppe bestehend aus Ethylenglycoldimethacrylat, 2,2-Dimethyl-1,3-propandioldiacrylat, 2,2-Dimethyl-1,3-propandioldimethacrylat, Diethylenglycoldiacrylat, Diethylenglycoldimethacrylat, Ethylenglycoldiacrylat, Dipropylenglycoldimethacrylat und 3-(N,N-Dimethylaminopropyl)-1,2-diacrylat. Besonders bevorzugt ist hierbei die Verwendung von Ethylenglycoldimethacrylat als Vernetzer.
Bei Verwendung dieser Vernetzter erhält man Anionenaustauscherharze, die eine besonders gute mechanische Stabilität und hohe Porosität aufweisen.

In einer weiteren Variante der Erfindung wird ein Anionenaustauscherharz verwendet, in dem das Acrylsäurederivat und der Vernetzer 3-(N,N-Dimethylaminopropyl)-1,2-diacrylat ist. Das so erhaltene Anionenaustauscherharz wird in diesem Fall nicht durch Copolymerisation, sondern durch Polymerisation nur einer Monomerenspezies erhalten.

Bei der Polymerisation kann ein Porenbildner zugegen sein, der z.B. durch einen aliphatischen Alkohol und/oder durch eine polymere Verbindung verkörpert wird. Derartige Porenbildner sind aus dem Stand der Technik bekannt.

Als Porenbildner werden in einer weiteren besonders bevorzugten Ausführungsform der Erfindung aliphatische, verzweigte oder unverzweigte Alkohole mit 4 bis 20-C-Atomen, bevorzugt 4 bis 16-C-Atomen und besonders bevorzugt 4 bis 8-C-Atomen mit einer oder mehreren Hydroxygruppen, bevorzugt 1-3 Hydroxygruppen oder polymere Verbindungen verwendet, deren massengemittelte Molekülmasse M_{w} zwischen 200 und 100000 g/mol liegt, und die ausgewählt sind aus der Gruppe bestehend aus Polyalkylidenglycolderivaten, Polyethylenimin, Polyvinylpyrollidon und Polystyrol .
Erfindungsgemäß werden besonders bevorzugt Porenbildner eingesetzt, die ausgewählt sind aus der Gruppe bestehend Polyethylenglycol (M_{w}: 200 - 10000 g/mol), Polypropylenglycol (M_{w}: 200 - 10000 g/mol), Polyethylenglycolmonoalkylether (M_{w}: 200 - 5000 g/mol), Polyethylenglycoldialkylether (M_{w}: 200 - 5000 g/mol), Polyethylenglycolmonoalkylester (M_{w}: 200 - 20000 g/mol), Polyethylenglycoldialkylester (M_{w}: 200 - 5000 g/mol), Polyethylenglycoldisäure (M_{w}: 1000 - 20000 g/mol), Polyethylenimin (M_{w}: 200 - 10000 g/mol), Polyvinylpyrrolidon (M_{w}: 10000 - 40000 g/mol) und/oder Polystyrol (M_{w}: 200 - 5000 g/mol).
Besonders bevorzugt wird in der vorliegenden Erfindung als Porenbildner Polyethylenglycol (M_{w}: 1000 - 6000 g/mol) verwendet.

In einer weiteren bevorzugten Ausführungsform der vorliegenden Erfindung wird das Anionenaustauscherharz in Form von Partikeln verwendet, wobei die Partikelgröße zwischen 1 und 10000 µm liegt. Um das Anionenaustauscherharz in der gewünschten partikulären Form zu erhalten, kann das Polymerisat nach erfolgter Poymerisationsreaktion, die zwischen 12 und 28 Stunden in Anspruch nehmen kann, gewaschen, gemahlen und gesiebt werden. Für die Verwendung des erfindungsgemäßen Anionenaustauscherharzes in analytischen Applikationen werden kleinere Partikel bevorzugt eingesetzt, wohingegen für präparative Anwendungen, wie z.B. in "gravity flow" Säulen, größere Partikel bevorzugt sind.

Das Anionenaustauscherharz kann in vielfältigen Formen eingesetzt werden. Erfindungsgemäß kann es in Form eines Filters, einer Membran oder als monolithische Säule verwendet werden. Die Membranen und/oder Filter können unterschiedlichste Durchmesser und Schichtdicken aufweisen .
So kann die Schichtdicke beispielsweise zwischen 0,1 bis 2 mm liegen. Es ist auch möglich mehrere Membranen oder Filterschichten zu kombinieren.
In einer weiteren besonders bevorzugten Ausführungsform der vorliegenden Erfindung wird das Anionenaustauscherharz als Beschichtung auf einem Trägermaterial verwendet. Als Trägermaterial können poröse oder nicht poröse Feststoffe anorganischer oder organischer Natur eingesetzt werden. Als Trägermaterial können z.B. Diatomeenerde, Kieselgele, TiO₂, ZrO₂ oder Polymere dienen. Das Trägermaterial kann in Form von Partiklen, z.B. als gebrochene Polymerpartikel oder als sphärische Partikel, verwendet werden. Darüber hinaus kann es in weiteren Formen, wie z.B. Faser, Folien oder Membranen, eingesetzt werden.
Die Möglichkeit zur Verwendung als Beschichtung von Trägermaterialien bietet den Vorteil, daß das Anionenaustauschmaterial vielseitig eingesetzt werden kann. Neben der klassischen Säulenchromatographie mit gepackten Säulen ist auch die Verwendung in anderen chromatographischen Verfahren möglich. Insbesondere die Verwendung von Trägermaterialien mit einer hohen spezifischen Dichte, wie z.B. TiO₂, in Form von Partiklen ermöglicht die Verwendung des erfindungsgemäßen Anionenaustauscherharzes in der "Expanded Bed"-Chromatographie. Die Verwendung beschichteter Membranen hingegen ermöglicht den Einsatz in der "Simulated Moving Bed"-Chromatographie.

Weiterhin kann das Anionenaustauschermaterial erfindungsgemäß als Füllung poröser Feststoffe bzw. Feststoffoberflächen anorganischer oder organischer Natur verwendet werden.

In einem weiteren Aspekt der vorliegenden Erfindung wird ein chromatographisches Verfahren bereitgestellt, wobei das Verfahren die folgenden Schritte umfasst:
a) Aufbringen einer mindestens eine Nukleinsäure-Spezies enthaltenden Probe auf eine stationäre Phase, wobei die stationäre Phase ein Anionenaustauscherharz wie definiert in einem der Ansprüche 1 bis 21 umfaßt; und
b) b) Elution der mindestens einen Nukleinsäure-Spezies durch ein Elutionsmittel.

In einer erfindungsgemäßen Ausführungsform des Verfahrens wird als Elutionsmittel eine Ionen enthaltende Lösung verwendet. In einer besonders bevorzugten Variante des erfindungsgemäßen Verfahrens wird die Leitfähigkeit des Elutionsmittel während des Elutionsschrittes kontinuierlich von einem unteren Grenzwert, der der Leitfähigkeit des Wassers oder des Salzfreien Eluenten entspricht, bis 120 mS/cm oder höher verändert. Die Veränderung der Leitfähigkeit kann dabei durch Erhöhung der Ionenkonzentration des Elutionsmittels z.B. mittels eines linearen Gradienten erfolgen. Alternativ kann die Leitfähigkeit des Elutionsmittel während des Elutionsschritts stufenweise, also mittels eines Stufengradienten, verändert werden.

Besonders bevorzugt ist es dabei, die Leitfähigkeit durch Erhöhung der Ionenkonzentration einer NaCl-Salz Lösung von 0-2000 mM während des Elutionsschritts zu verändern.

Die Veränderung der Leitfähigkeit des Elutionsmittel wird dem Adsorptionsverhalten der zu isolierenden Nukleinsäure-Spezies auf dem Anionenaustauscherharz angepaßt. Die Erhöhung der Leitfähigkeit des Elutionsmittel während des Elutionsschrittes ist somit immer dann zur Trennung bzw. Reinigung, Isolierung oder Analyse vorteilhaft, wenn die zu trennende Nukleinsäure-Spezies bei niedriger Leitfähigkeit von z.B. einem unteren Grenzwert, der der Leitfähigkeit des Wassers oder des Salzfreien Eluenten entspricht, bis 60 mS/cm bevorzugt adsorbiert wird und erst bei hoher Leitfähigkeit des Elutionsmittel z.B bis 120 mS/cm oder höher wieder desorbiert wird.
In einer besonders bevorzugten Ausführungsform des Verfahrens ist die Nukleinsäure-haltige Probe ein Bakterienlysat, insbesondere ein E.coli-Lysat. Besonders bevorzugt wird durch das erfindungsgemäße Verfahren, Plasmid-DNA gereinigt bzw. isoliert. Weiterhin kann das erfindungsgemäße Verfahren im Rahmen einer Analysemethode oder eines Präparationsverfahrens eingesetzt werden.

Unter die im Rahmen der vorliegenden Erfindung beanspruchten Gegenstände fallen auch die Verfahren zur Herstellung sämtlicher oben spezifizierten Anionenaustauscherharze.

Die vorliegende Erfindung wird nachfolgend anhand der Ausführungsbeispiele und Figuren weiter erläutert.

Es zeigen:
Fig. 1 bis 9 eine graphische Darstellung verschiedener Elutionsprofile für unterschiedliche erfindungsgemäße Anionenaustauschermaterialien unter verschiedenen Elutionsbedingungen.
Fig. 10 ein Agarose Gel von pBR322 Präparationen.

Die Anionenaustauscherharze der vorliegenden Erfindung wurden gemäß den Beispielen 1.1 bis 1.6 dargestellt.
Allgemein umfaßt die Synthese der erfindungsgemäßen Anionenaustauschermaterialien bei radikalischer Polymerisation die Schritte a.) Gegebenenfalls Entschützen der Monomere, also des Acrylsäurederivats und/oder des Vernetzers; b.) Herstellung der Monomerenmischung; c.) Zugabe von Lösungsmittel, Radikalstarter und optional Zugabe eines Porogens; d.) Entgasung des Reaktionsgemisches; und e.) Polymerisation bei 60°C über einen Zeitraum von 12 bis 24 h.
Um das so erhaltene Polymerisat in partikuläre Form zu bringen, kann es anschließend gemahlen und gewaschen werden und durch Naßsiebung klassiert werden.

In Tabelle 1 sind die Elutionseigenschaften zur DNA/RNA-Trennung und Isolierung der in den Beispielen 1.1 bis 1.6 beschriebenen Anionenaustauscherharze, sowie weiterer erfindungsgemäßer Beispiele dargestellt. Bei der Synthese der Harze wurden unterschiedliche Porogene verwendet und/oder die Zusammensetzung der Reaktionsmischung variiert.

In den Beispielen 2 und 3 ist die Beschichtung von TiO₂₋Partikeln bzw. SiO₂-Partikeln mit den erfindungsgemäßen Anionenaustauscherharzen beschrieben. Allgemein umfaßt die Methode zur Beschichtung von Trägermaterialien mit dem erfindungsgemäßen Anionenaustauscherharz die Schritte: a.) Gegebenenfalls beladen der Trägerpartikel mit Radikalstarter; b.) Zugabe der Monomere, also des Acrylsäurederivats und des Vernetzers, des Porogens und des Lösungsmittels; c.) Durchmischung des Reaktionsgemisches; d.) Entfernung überschüssigen Reaktionsgemisches von den Trägerpartikeln; e) Polymerisation bei 60°C, über einen Zeitraum von 12 bis 24 h; und f.) Waschen des beschichteten Trägermaterials. Bei TiO₂ -Partiklen erfolgt die Beschichtung durch die Benetzung der Partikle mit dem Reaktionsgemisch und nachfolgender Polymerisation.

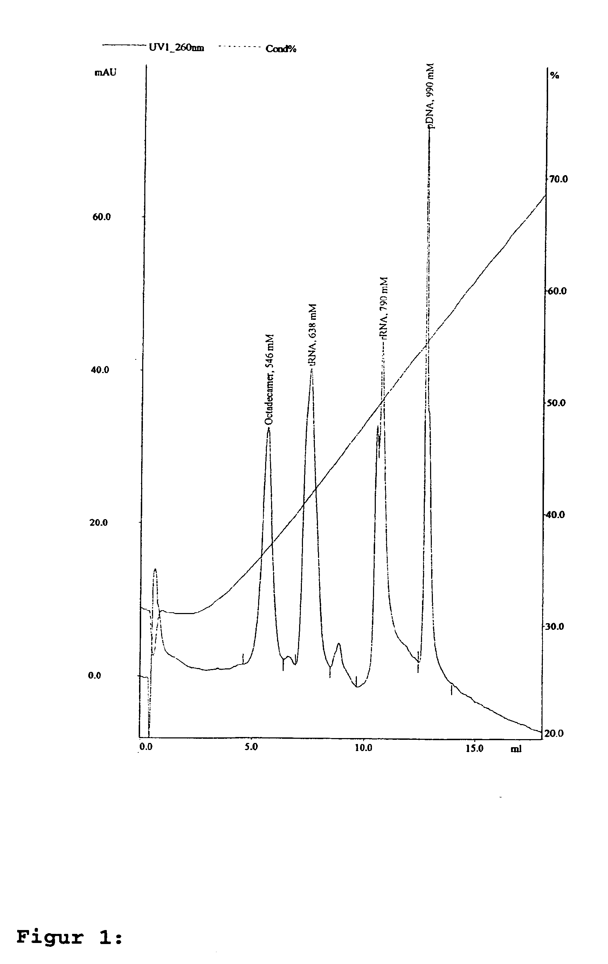

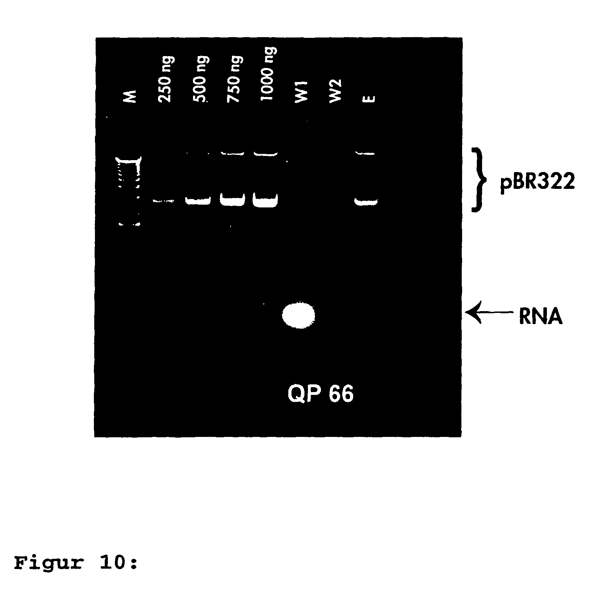

Die Selektivität der Anionenaustauscherpartikel hinsichtlich verschiedener Nukleinsäuren (Oligonukleotid (18-mer), tRNA, rRNA (16S/23S), M13 DNA, pDNA) wird an Hand der in den Fig. 1 bis 9 abgebildeten Chromatogrammen von Beispiel 4 verdeutlicht. In Beispiel 5 gezeigt wie das erfindungsgemäße Anionenaustauscherharz zur Präparation von pDNA aus geklärtem Bakterienlysat eingesetzt werden kann. Die Identität und Reinheit der isolierten pDNA wurde durch Agarosegelelektrophorese und Polyacrylamidgelelektrophorese überprüft (Fig. 10 und 11).

Weiterhin ist die Bestimmung der statischen und dynamischen pDNA Bindekapazität in den Beispielen 6 und 7 beschrieben und für einige ausgewählte Anionenaustauscherharze sind die Bindekapazitäten angegeben.

Obwohl Anwendungen des Polymers nur am Beispiel gebrochener Partikel und beschichteter, poröser anorganischer Trägerpartikel gezeigt werden, können andere Ausführungsformen des erfindungsgemäßen Polymers hergestellt werden, ohne die gezeigten Eigenschaften wie Bindekapazitäten und chromatographische Selektivitäten wesentlich zu verändern. Andere Ausführungsformen wären z.B. das erfindungsgemäße Polymer als Beschichtung poröser organischer Trägerpartikel zu verwenden oder zur Beschichtung nicht poröser Feststoffoberflächen anorganischer oder organischer Natur. Das erfindungsgemäße Polymer kann auch in Form von Membranen unterschiedlicher Durchmesser und Schichtdicken eingesetzt werden oder als sphärische Partikel, über einen weiten Bereich von Partikelgrößen, verwendet werden.
Die Prozentangaben beziehen sich - soweit nicht anders angegeben auf Gewichtsprozente (w/w).

### Beispiel 1:

### Herstellung der erfindungsgemäßen polymeren Anionenaustauscherharze

### Beispiel 1.1:

### Copolymerisation von 2-(N,N-Dimethylamino)ethylacrylat mit Ethylenglycoldimethacrylat:

In einem 10 ml Meßkolben wurden 1,5 ml Dimethylaminoacrylat mit Ethylenglycoldimethacrylat auf 10 ml aufgefüllt (Lösung I). In einem 25 ml Meßzylinder wurden 6 ml 1-Hexanol mit Dimethylsulfoxid auf 20 ml aufgefüllt (Lösung II). In einem 50 ml Rundkolben wurden zu 66 mg Azoisobutyronitril 7,5 ml der Lösung I und 17,5 ml der Lösung II pipettiert. Die Mischung wurde entgast (z.B. durch drei "freeze pump thaw" Zyklen), mit Argon gespült und 24 h bei 60 °C polymerisiert (üarzkennung: QP3).

### Beispiel 1.2:

### Copolymerisation von N-(3-(Dimethylamino)propyl)methacrylamid mit Ethylenglycoldimethacrylat:

Eine Lösung von N-(3-(Dimethylamino)propyl)methacrylamid (19,5%), Ethylenglycoldimethacrylat (10,5%) und Polyethylenglycol (M_{w}:3000)(21%) in Methanol (49%) wurde bereitet (Prozentangaben sind Gewichtsprozentangaben bezogen auf das Gewicht der Lösung). Zu 10 ml dieser Lösung wurden 25 mg AIBN gegeben. Die resultierende Lösung wurde mit Argon gespült und dann für 24 h auf 60 °C erhitzt (Harzkennung: QP66).

### Beispiel 1.3:

### Copolymerisation von N-(3-(Dimethylamino)propyl)methacrylamid mit Ethylenalycoldimethacrylat:

Eine Lösung von N-(3-(Dimethylamino)propyl)methacrylamid (15%), Ethylenglycoldimethacrylat (15%), und Polyethylenglycol (M_{w}:3000) (17,5%) in Methanol (52,5%) wurde bereitet. (Prozentangaben sind Gewichtsprozentangaben bezogen auf das Gewicht der Lösung). Zu 10 ml dieser Lösung wurden 25 mg AIBN (Azoisobutyronitril)zugegeben. Die resultierende Lösung wurde mit Argon gespült und dann für 24 h auf 60 °C erhitzt (Harzkennung: QP71).

### Beispiel 1.4:

### Copolymerisation von N-(3-(Dimethylamino)propyl)methacrylat mit Ethylenglycoldimethacrylat:

Eine Lösung von N-(3-(Dimethylamino)propyl)methacrylat (15%), Ethylenglycoldimethacrylat (15%), Polyethylenglycol (M_{w} :3000) (17,5%) in Methanol (52,5%) wurde bereitet. (Prozentangaben sind Gewichtsprozentangaben bezogen auf das Gewicht der Lösung). Zu 10 ml dieser Lösung wurden 25 mg AIBN zugegeben. Die resultierende Lösung wurde mit Argon gespült und dann für 24 h auf 60 °C erhitzt (Harzkennung: QP80).

### Beispiel 1.5:

### Copolymerisation von 2-(N,N-Dimethylamino)ethylacrylat mit Pentaerythritoltriacrylat:

In einem 5,0 ml Meßzylinder wurden 0,9 ml 2-(N,N-Dimethylamino)ethylacrylat vorgelegt und mit Pentaerythritoltriacrylat zu 3,0 ml ergänzt. In einem 10 ml Meßzylinder wurden 2,4 ml 1-Hexanol vorgelegt und mit Dimethylsulfoxid zu 10 ml ergänzt. In einem 10 ml Meßzylinder wurden 3,0 ml Monomerengemisch mit dem Lösungsmittelgemisch auf 10 ml aufgefüllt. Die Mischung wurde in einen Rundkolben überführt, durch drei "freeze pump thaw" Zyklen entgast, mit Argon gespült und 24 h bei 60 °C polymerisiert (Harzkennung: QP₄)_{.}

### Aufarbeitung der Polymerisate aus den Beispielen 1.1 bis 1.5:

Das Polymerisat wurde auf einer Glasfilternutsche mit Aceton gewaschen, getrocknet und anschließend gemahlen. Die gewünschten Partikelgrößen wurden durch Naßsiebung erhalten. Bis zur weiteren chromatographischen Charakterisierung wurden die Partikel unter einer Ethanol/Wasser-Mischung (20 Vol%) gelagert.

### Beispiel 1.6:

### Copolymerisation von N-(3-(Dimethylamino)propyl)methacrylamid mit Ethylenglycoldimethacrylat:

In einen 500 ml Rundkolben wurden 19,5 ml N-(3-(Dimethylamino)propyl)methacrylamid, 10,5 ml Ethylenglycoldimethacrylat, 21 g Polyethylenglycol (M_{w}: 3000), 250 mg Azoisobutyronitril in 49 ml Methanol gelöst. Durch die Mischung wurde für mindestens eine Minuten Argon geperlt, der Kolben mit einem Überdruckventil verschlossen und das Gemisch wurde für 24 h bei 60 °C polymerisiert. Das Polymerisat wurde in eine Extraktionshülse überführt und im Soxhlett-Extraktor zunächst mit Aceton, dann mit Wasser für je 2h extrahiert. Das Material wurde dann auf einer Filternutsche mit Methanol gewaschen und im Vakuumtrockenschrank bei 60 °C getrocknet. Aus 20 g Rohprodukt (noch Methanol und PEG haltig) erhält man nach Extraktion und Vakuumtrocknen 4,78 g polymeres Anionenaustauscherharz, das nach Mahlen und Klassieren 10 mg Unterkorn, 1.38 g (32 - 90 µm), 0.32 g (90 - 112 µm) und 2.67 g Überkorn ergab (Harzkennung: QP90).

Die oben beschriebenen sowie weitere, erfindungsgemäße polymere Anionenaustauscherharze und deren relevante chromatographische Daten sind in Tabelle 1 aufgeführt:

**Tabelle 1:**

| **Harz** | **Vernetzer** | **Porogen** | **Eduktverhältnis (Gew%) [A:B:C:D]**^{**#**} | **rRNA (16S23S)** | **pDNA** | **DNA-RNA** | **Acrylsäurederivat/ Bemerkungen** |
|---|---|---|---|---|---|---|---|
| | | | | **[NaCI]/[M]** | **[NaCl]/[M]** | **[NaCl]/ [mM]** | |
| QP29 | EGDMA* | 1-Butanol | 7,5% : 22,5% : 49% : 21% | 0,785 | 0,836 | 51 | DMAPMAA* |
| QP30 | " | 2-Butanol | 7,5% : 22,5% : 49% : 21% | 0,773 | 0,844 | 71 | " |
| QP31 | " | Hexanol | 7,5% : 22,5% : 49% : 21% | 0,777 | 0,831 | 54 | " |
| QP32 | " | Heptanol | 7,5% : 22.5% : 49% : 21% | 0,770 | 0,825 | 55 | " |
| QP33 | " | Octanol | 7,5% : 22,5% : 49% : 21% | 0,775 | 0,831 | 56 | " |
| QP34 | " | PEG 600 | 7,5%: 22,5%: 49%: 21% | 0,760 | 0,815 | 55 | " |
| QP35 | " | PEG 2000 | 7,5% : 22.5%: 49% : 21% | 0,722 | 0,785 | 63 | " |
| QP36 | " | PEG 4000 | 7,5% : 22,5% : 49%: 21% | 0,758 | 0,836 | 78 | " |
| QP37 | " | PEG 8000 | 7.5%: 22,5% : 49% : 21% | 0,689 | 0,756 | 67 | " |
| QP38 | " | PEG 20000 | 7,5% : 22.5% : 49% : 21% | 0,663 | 0,731 | 68 | " |
| QP40 | " | PPG 425 | 7,5%: 22,5%:49%: 21% | 0,699 | 0,758 | 59 | " |
| QP41 | " | PPG 725 | 7,5%: 22.5%: 49%: 21% | 0,756 | 0,823 | 67 | " |
| QP42 | " | PPG 1000 | 7.5%: 22,5%: 49%: 21% | 0,745 | 0,810 | 65 | " |
| OP43 | " | PPG 2000 | 7,5%: 22,5% : 49% : 21% | 0,747 | 0,814 | 67 | " |
| OP44 | " | PPG 4000 | 7,5% : 22,5% : 49%: 21% | 0,750 | 0,821 | 71 | " |
| QP45 | " | PEG 4000 | 4.5%: 25,5% : 49%: 21% | 0,728 | 0,791 | 63 | " |
| OP46 | " | PEG 4000 | 7,5% : 22.5%: 49% : 21% | 0,743 | 0,815 | 72 | " |
| QP47 | " | PEG 4000 | 10.5% : 19,5% : 49%: 21% | 0,766 | 0,854 | 88 | " |
| OP48 | " | PEG 4000 | 7,5% : 22,5% : 49% : 21% | 0,531 | 0,601 | 70 | DEAMPMAA |
| QP49-2 | " | PEG 4000 | 10.5%: 19,5%: 49% : 21% | 0,351 | 0,244 | -107 | Polymerisation 1h |
| QP49-3 | " | PEG 4000 | 10,5% : 19,5%: 49% : 21% | 0,724 | 0,764 | 40 | Polymerisation 3h |
| QP50 | EGDMA/ 1.5%Methacrylsäure | PEG 4000 | 10,5%: 18%: 49%: 21% | 0,682 | 0,752 | 70 | DMAPMAA* |
| OP51 | EGDMA | PEG 4000 | 13,5% : 16,5% : 49% : 21% | 0,775 | 0,856 | 81 | .. |
| QP52 | " | PEG 4000 | 16,5%: 13.5%: 49%: 21% | 0,796 | 0,890 | 94 | |
| QP53 | " | PEG 4000 | 19,5%: 10.5%: 49%: 21% | 0,796 | 0,890 | 94 | " |
| QP56-2 | " | PEG 4000 | 15%: 15%: 60,2%: 9.8% | 0,770 | 0,854 | 84 | " |
| QP56-3 | " | PEG 4000 | 10,5% : 19,5% : 64,4%: 5,6% | 0,758 | 0,833 | 75 | " |
| QP56-4 | " | PEG 4000 | 15% : 15% : 63% : 7% | 0,775 | 0,859 | 84 | " |
| QP57-2 | " | PEG 4000 | 15% : 15% : 47,6% : 22,4% | 0,766 | 0,863 | 97 | " |
| QP57-3 | " | PEG 4000 | 10,5% : 19,5% : 55,3% : 14.7% | 0,749 | 0,823 | 74 | " |
| QP57-4 | " | PEG 4000 | 15% : 15% : 52,5% : 17,5% | 0,771 | 0,861 | 90 | " |
| QP58-1 | " | PEG 4000 | 19,5% : 10,5% : 39.2% : 30,8% | 0,787 | 0,890 | 103 | " |
| QP58-2 | " | PEG 4000 | 15% : 15% : 28,7% : 41,3% | 0,791 | 0,886 | 95 | " |
| QP58-3 | " | PEG 4000 | 10,5% : 19,5% : 39,2% : 30.8% | 0,766 | 0,840 | 74 | " |
| OP58-4 | " | PEG 4000 | 15% : 15% : 35% : 35% | 0,770 | 0,873 | 103 | " |
| OP58-5 | " | PEG 3000 | 50% : 50% : 50% : 50% | 0,787 | 0,892 | 105 | " |
| OP58-6 | " | PEG 3000 | 15%:15%:35%: 35% | 0,764 | 0,863 | 99 | " |
| QP59 | DPDA* | PEG 4000 | 10,5% : 19,5% : 49% : 21% | 0,601 | 0,621 | 20 | " |
| QP60 | DPDMA* | PEG 4000 | 10,5% : 19,5% : 49% : 21% | 0,739 | 0,817 | 78 | " |
| OP62 | DEDMA* | PEG 4000 | 10,5% : 19,5% : 49% : 21% | 0,701 | 0,743 | 42 | " |
| QP64 | DPDMA* | PEG 4000 | 10,5% : 19,5% : 49% : 21% | 0,689 | 0,756 | 67 | " |
| QP66 | EGDMA " | PEG 3000 | 19,5% : 10,5% : 49% : 21% | 0,762 | 0,867 | 105 | " |
| QP71 | EGDMA | PEG 3000 | 15% : 15% : 52,5% : 17,5% | 0,770 | 0,867 | 97 | " |
| QP71-A | " | PEG 3000 | 15% : 15% : 52,5% : 17,5% | 0,747 | 0,842 | 95 | Argon |
| OP71- OA | " | PEG 3000 | 15% : 15% : 52,5% : 17,5% | 0,770 | 0,856 | 86 | ohne Argon |
| QP74 | EGDMA/(2- Hydroxyeth yl)methacry lat | PEG 3000 | 8,8% : 17,6% : 3,5% : 49% : 21% | 0,726 | 0,794 | 68 | |
| QP78-1 | " | PEG 3000 | 18% : 12% : 49% : 21% | 0,817 | 0,915 | 98 | |
| QP80 | " | PEG 3000 | 15% : 15% : 52,5% : 17,5% | 0,794 | 0,827 | 33 | DMAPMA |
| QP83 | " | PEG 3000 | 15% : 15% : 49% : 21% | 0,777 | 0,865 | 88 | 21 facher Ansatz |
| QP84 | " | PEG 2000 Monomethylether | 15% : 15% : 49% : 21% | 0,798 | 0,867 | 69 | |
| QP85 | " | PEG 5000 Monomethylether | 15%:15%:49%: 21% | 0,768 | 0,835 | 67 | |
| QP86 | " | PEG2000 Dimethylether | 15% : 15% : 49% : 21% | 0,808 | 0,882 | 74 | |
| QP87 | " | Polyvinyl- pyrrolidon | 15%: 15%: 49%: 21% | 0,779 | 0,857 | 78 | |
| QP89 IS | " | PEG 3000 | 13,6%:13,6%:19,1%:44,5%: 9.1% | 0,789 | 0,867 | 78 | |
| QP 92 | EGDMA | PEG 3000 | 15%:15%:49%:21% 5mgAIBN | | | | DMAPMAA* |
| QP93 | " | PEG 3000 | 15%:15%:49%:21% 10mg AIBN | 0,814 | 0,898 | 84 | " |
| QP94 | " | PEG 3000 | 15%:15%:49%:21% 15mg AIBN | 0,821 | 0,905 | 84 | |
| QP95 | " | PEG 3000 | 15% : 15% : 49% : 21% 20mg AIBN | 0,800 | 0,880 | 80 | " |
| QP96 | " | PEG 3000 | 15%: 15%: 49%: 21% 25mg AIBN | 0,810 | 0,888 | 78 | " |
| OP97 | " | PEG 3000 | 15% : 15% : 49% : 21% 50mg AIBN | | | | " |

Die in der Tabelle benutzen Abkürzungen bezeichnen die folgenden Verbindungen:
EGDMA: Ethylenglycoldimethacrylat
DPDA: Dipropylenglycoldiacrylat
DPDMA: Dipropylenglycoldimethacrylat
DEDMA: Diethylenglycoldimethacrylat
DPDMA: Dipropylenglycoldimethacrylat
DMAPMAA: N,N-Dimethylaminopropylmethacrylamid
DEAPMAA: N,N-Diethylaminopropylmethacrylamid
DMAPMA: N,N-Dimethylaminopropylmethacrylat
PEG: Polyethylenglycol (M_{w} in g/mol)
PPG: Polypropylenglycol (M_{w} in g/mol)
': A: Acrylsäurederivat, B: Vernetzer, C: Lösungsmittel, D: Porogen.

### Beispiel 2:

### Beschichtung von TiO₂ Partikeln:

2 ml N-(3-(Dimethylamino)propyl)methacrylamid,25 mg AIBN, 1 ml Ethylenglycoldimethacrylat, 3 g Polyethylenglycol (M_{w}: 3000) wurden in 8,85 ml Methanol gelöst. In dieser Mischung wurden 8,0 g (4,5 ml) poröse TiO₂-Partikel (Sachtopore® 40µm, < 5 m²g⁻¹, Porendurchmesser 2000 Å; Sachtleben GmbH) suspendiert. Die überschüssige flüssige Mischung wurde abgenutscht und das mit der flüssigen Mischung beladene TiO₂ in einen 50 ml Rundkolben überführt. Der Kolben wurde mit Agon gespült und für 24 h auf 60 °C erhitzt. Nach beendeter Polymerisation wurde das Material in einem Mörser zerkleinert, mit Aceton und dest. Wasser gewaschen. Eine 32 - 90 µm Siebfraktion des erhaltenen Produktes wurde bezüglich Bindekapazität und chromatographische Eigenschaften untersucht (Harzkennung: QP66Ti).

### Beispiel 3:

### Beschichtung von SiO₂ Partikeln

150 mg Natriumperoxodisulfat wurden in 6 ml Wasser gelöst und darin 2 g S-Gel (Kieselgel der Chemie Uetikon, 40 µm, 1000 Å suspendiert. Das Kieselgel wurde abgenutscht, mit 4 ml Methanol gewaschen und getrocknet. Das Kieselgel wurde dann in einer Mischung aus 2 ml N-(3-(Dimethylamino)propyl)methacrylamide, 1 mL Ethylenglycoldimethacrylat, 3 g Polyethylenglycol (M_{w} : 3000) und 8,85 ml Methanol suspendiert. Die Suspension wurde bei etwa 18 mbar für 1 - 2 min entgast und dann die überschüssige flüssige Mischung abgesaugt. Das so behandelte Kieselgel wurde in einen Rundkolben überführt und für 24 h auf 60 °C erhitzt (Harzkennung: QP66Si).

### Beispiel 4:

### Chromatographische Charakterisierung der in den Beispielen 1.1 bis 1.6 beschriebenen polymeren Anionenaustauscher:

Zur chromatographischen Charakterisierung der Trenneffizienz der in den Beispielen und den Tabellen beschriebenen polymeren Anionenaustauscherharze wurde jeweils eine 32 - 90 µm Siebfraktion in Suspension mit 20 vol.% Ethanol mit einer Flußrate bis zu 10 ml/min in eine HR 5/5 Säule (Amersham Pharmacia) 2 cm hoch gepackt. Die Säule wurde dann mit 50 mM Tris-Puffer (Tris-[hydroxymethyl]-aminomethan) pH 7,0; 15 Vol.% Ethanol äquilibrier und 50 µl einer Nukleinsäurelösung bzw. geklärtes Lysat auf die Säule gegeben.

Die Nukleinsäuren wurden dann bei einer Flußrate von 1 ml/min mit einem linearen NaCl-Gradienten eluiert.

Die in den Fig. 1 bis 9 gezeigten Chromatogramme verdeutlichen die Abhängigkeit der Nukleinsäuretrennung und -isolierung von der
a) Wahl des Anionenaustauscherharzes
b) Wahl eines Gradienten für das Elutionsmittel
c) Wahl des pH-Wertes

Bei den in Fig. 1 bis 4 dargestellten Chromatogrammen wurden folgende Versuchsparameter eingehalten:
Fig. 1: Trennung und Isolierung von Nukleinsäuren an dem Anionenaustauscherharz QP 66,
   Siebfraktion: 32-90 µm,
   Gradient des Elutionsmittels: 400 mM - 1040 mM NaCl; Nukleinsäureprobe: 18-mer (2 µg), tRNA (7,5 µg), rRNA 16S/23S (45 µg), pDNA (5 µg) in 50 µl Puffer (10mmol TRIS (Tris-[hydroxymethyl]-aminomethan), 1 mmol EDTA (Ethylendiamintetraessigsäure), pH 8,0)

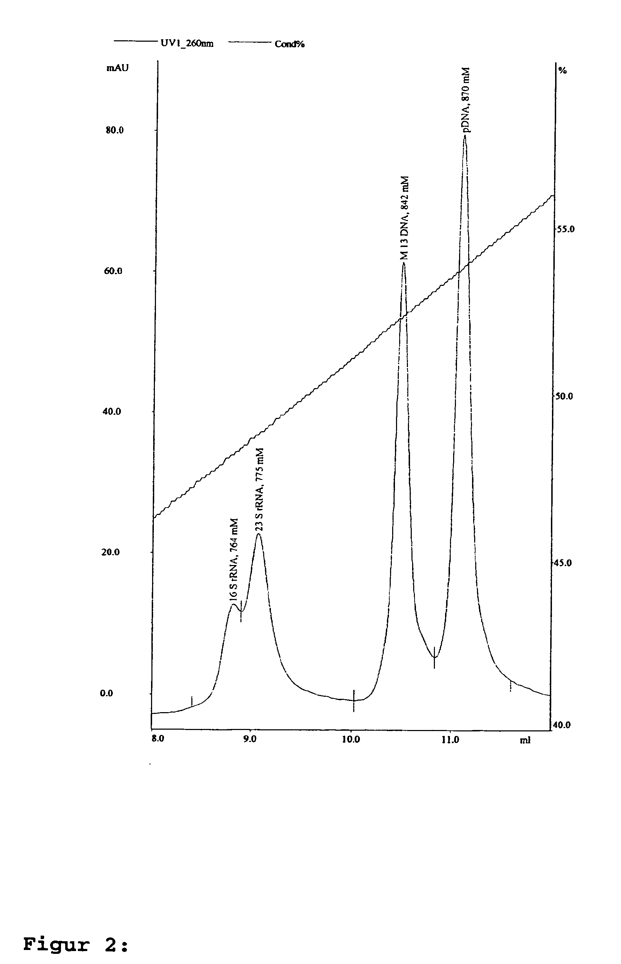

Fig. 2: Trennung und Isolierung von Nukleinsäuren an dem Anionenaustauscherharz QP 71,
   Siebfraktion 32-90 µm,
   Gradient des Elutionsmittels: 840 mM - 1100 mM NaCl; Nukleinsäureprobe: rRNA 16S/23S (10,0 µg), M13 DNA (6,3 µg), pDNA (4,0 µg) in 50 µl Puffer (10mmol TRIS, 1 mmol EDTA, pH 8)

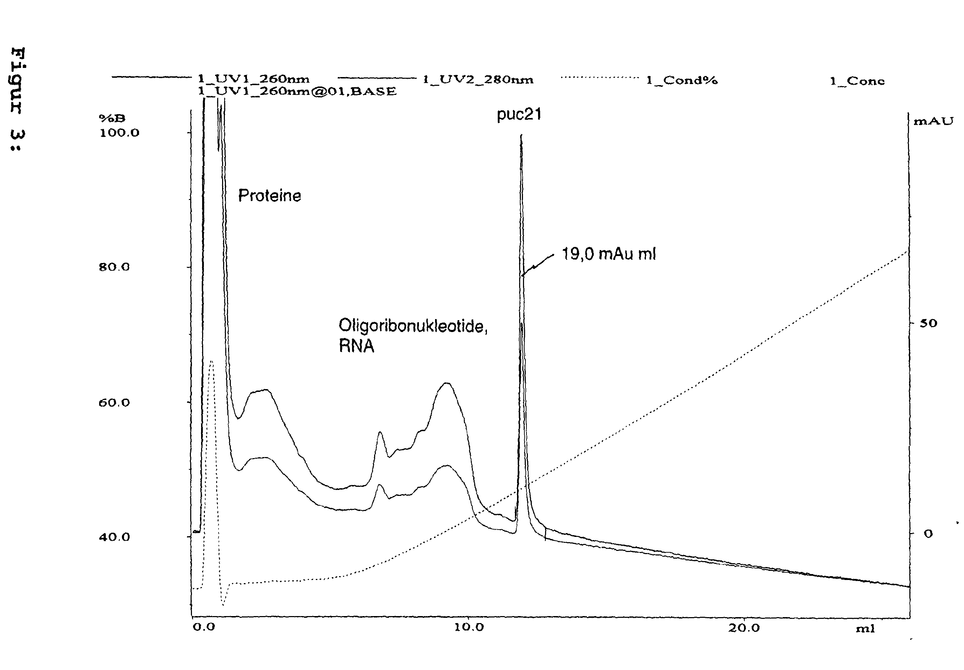

Fig. 3: Reinigung und Isolierung von pDNA eines RNase verdauten, geklärten Lysats von *Escherichia coli* DH5α (puc21 transformiert)(DSM-Nr. 6897) 50 µl Injektionsvolumen, Anionenaustauscherharz QP 57-2,
   Gradient des Elutionsmittels: 400 mM - 2000 mM NaCl.

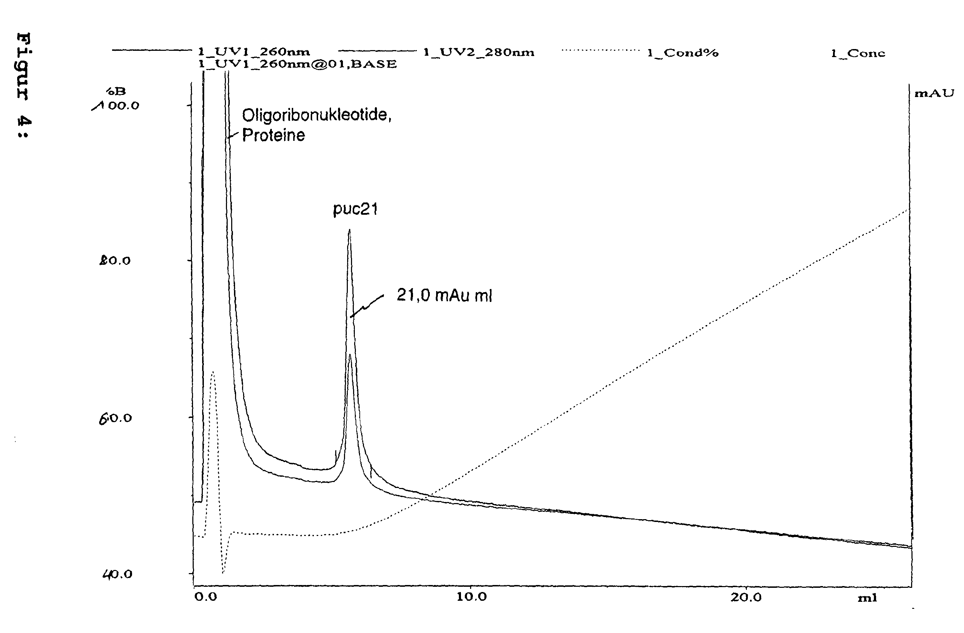

Fig. 4: Reinigung und Isolierung von pDNA eines RNase verdauten, geklärten Lysats von *Escherichia coli* DH5α (puc21 transformiert), 50 µl Injektionsvolumen,Anionenaustauscherharz QP 57-2,Säule wurde vor der Injektion mit 800 mM NaCl äquilibriert,
   Gradient des Elutionsmittels 800 mM - 2000 mM NaCl

Die in den Fig. 1 bis 4 abgebildeten Chromatogramme zeigen deutlich die Auftrennung der verschiedenen Nucleinsäurespezies und die für die Isolierung von pDNA besonders günstige Elutionsreihenfolge der verschiedenen Nukleinsäurespezies mit zunehmendem Salz-Gradienten im Elutionsmittel.

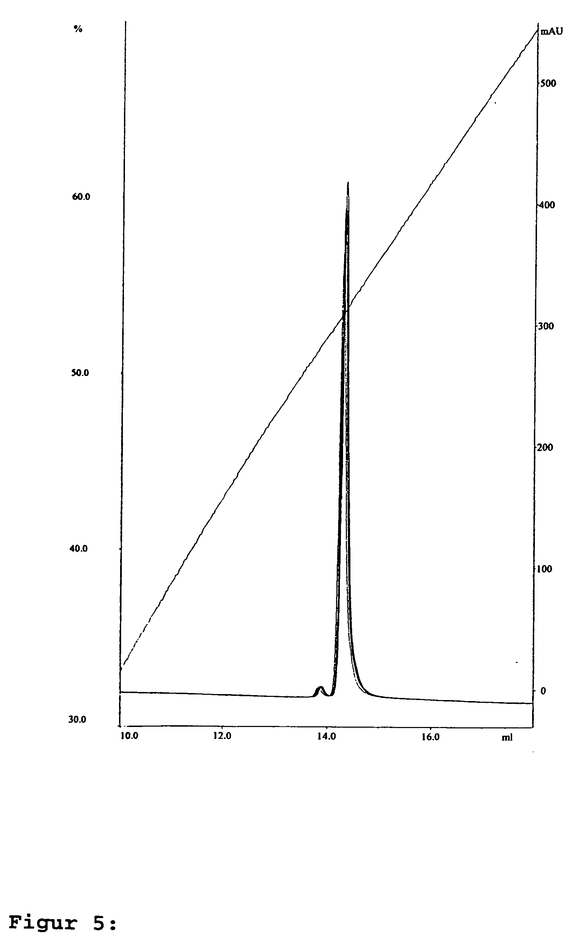

Das in Fig. 5 dargestellte Chromatogramm verdeutlicht die Basenstabilität des verwendeten Anionenaustauscherharzes und damit dessen Wiederverwertbarkeit, sowie die Möglichkeit zur "Vor-Ort-Reinigung" ("Cleaning in Place" ,CIP). Dazu wurde das Anionenaustauscherharz QP71 in einer HR5/5 Säule (Amersham/Pharmacia) 40 bis 100 Säulenvolumen 0,1 M Natriumhydroxidlösung mit einer Flußrate von 1 ml/min gewaschen und danach jeweils der Elutionspunkt von puc21 bestimmt. Wie aus Fig. 5 und Tabelle 3 hervorgeht, konnte im Rahmen der Meßgenauigkeit keine Verschiebung des Elutionspunktes festgestellt werden.

**Tabelle 3: "Vor-Ort-Reinigung" ("Cleaning in Place")**

| Säulenvolumen 0,1 M NaOH | Elution pDNA [NaCl]/[mM] QP 71, 32-90 um |
|---|---|
| 40 | 1102 |
| 50 | 1100 |
| 60 | 1104 |
| 70 | 1104 |
| 80 | 1106 |
| 90 | 1104 |
| 100 | 1108 |

Anschließend wurde das Anionenaustauscherharz aus der HR5/5 Säule entnommen, mit Methanol gewaschen, getrocknet und die pDNA Bindekapazität bestimmt. Es war keine Verminderung der Bindekapazität festzustellen (s. Tabelle 6: QP71, QP71CIP).

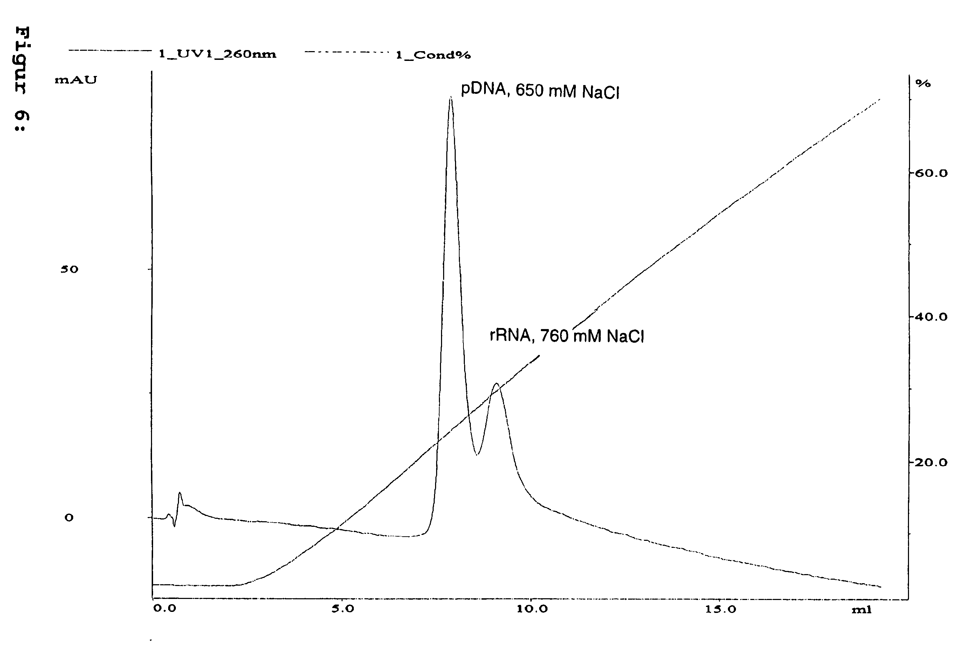

In Fig. 6 ist die Trennung und Isolierung von pDNA und rRNA an dem Anionenaustauscherharz QP3 dargestellt.
Siebfraktion: 32 - 90 µm;
Nucleinsäureprobe: pDNA, rRNA (16S/23S);
Gradient des Elutionsmittels: 0 mM - 1200 mM NaCl.

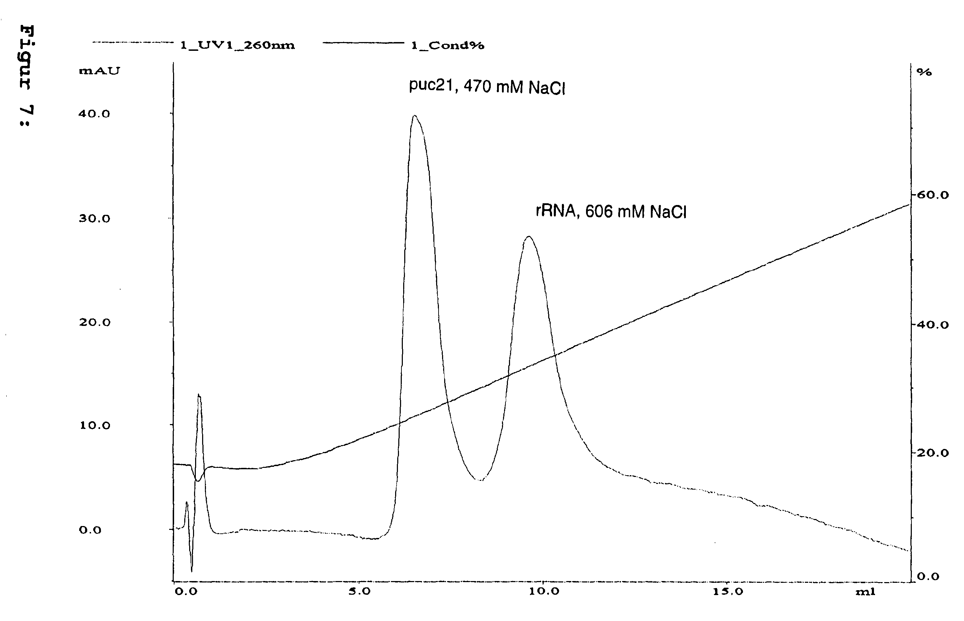

In Fig. 7 ist die Trennung und Isolierung von von pDNA und rRNA an dem Anionenaustauscherharz QP4 dargestellt.

Siebfraktion: 32 - 90 µm;
Nukleinsäureprobe: pDNA, rRNA (16S/23S);
Gradient des Elutionsmittels: 200 mM - 800 mM NaCl.

Die in Fig. 6 und 7 abgebildeten Chromatogramme zeigen, dass sich bei Verwendung dieses Anionenaustauscherharzes, bei dem ein Acrylat als Acrylsäurederivat in der Polymerisationreaktion verwendet wurde, die Elutionsreihenfolge von pDNA und rRNA im Vergleich zu den vorher beschriebenen Anionenaustauscherharzen, bei denen Acrylsäureamide eingesetzt wurden, umkehrt.

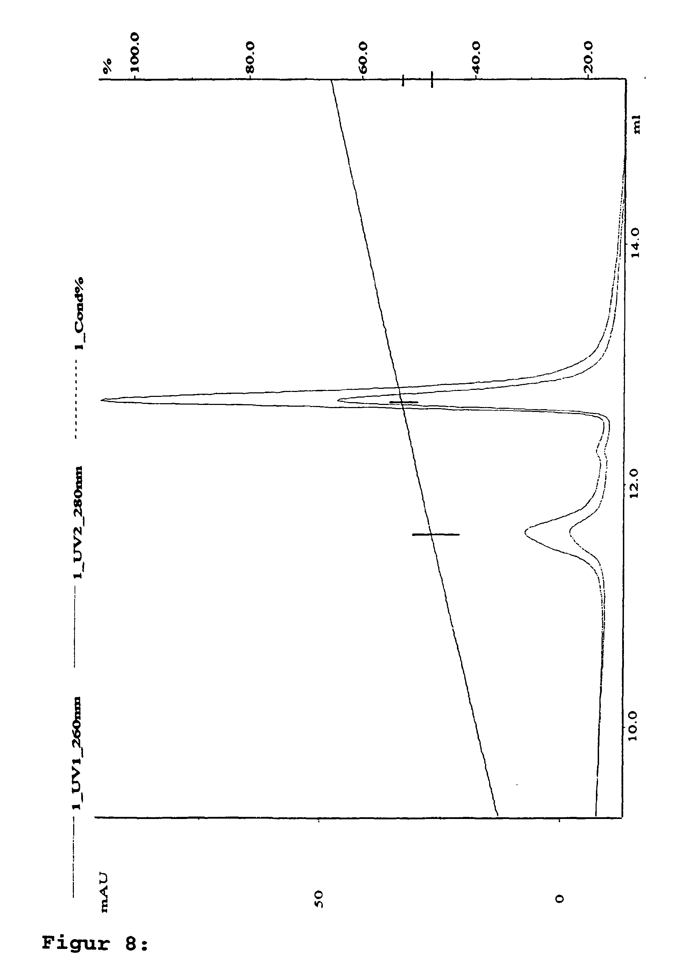

In Fig. 8 ist die Trennung und Isolierung von Nukleinsäuren an mit dem Anionenaustauscherharz QP66Ti beschichteten TiO₂₋Partikeln dargestellt. Siebfraktion: 32 - 90 µm;
Nukleinsäureprobe: pDNA, rRNA (16S/23S);
Gradient 880 mM - 1200 mM NaCl.

Das Chromatogramm zeigt deutlich, dass die Trennwirkung des Anionenaustauscherharzes, sowie die für die p-DNA Isolierung vorteilhafte Elutionsreihenfolge der einzelnen Nukleinsäurespezies auch bei Verwendung des Anionenaustauscherharzes als Beschichtung erhalten bleibt.

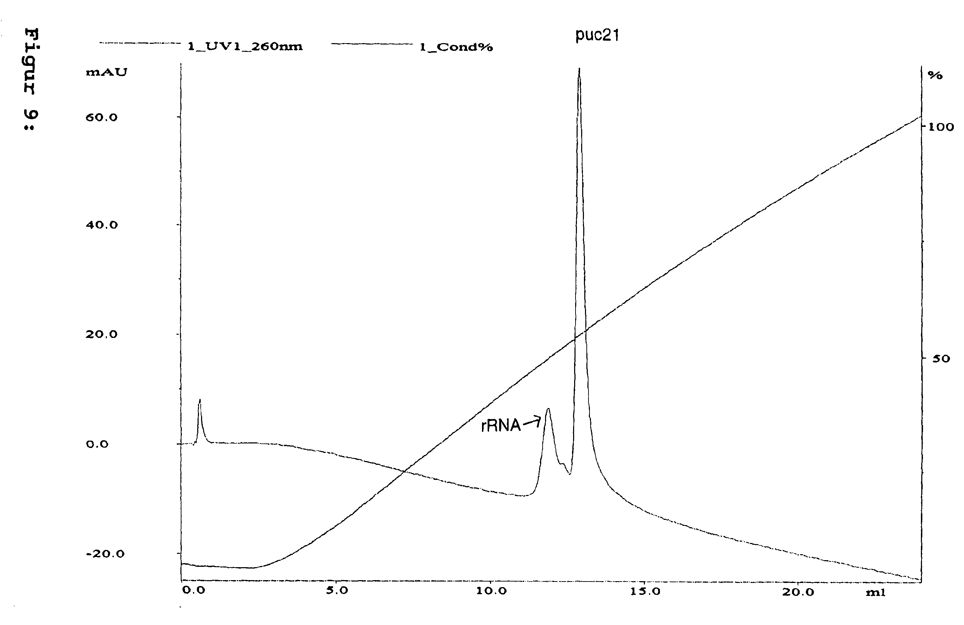

In Fig. 9 ist die Trennung und Isolierung von Nukleinsäuren an mit dem Anionenaustauscherharz QP66Si beschichteten Sio 2-Partikeln dargestellt. Siebfraktion: 32 - 90 µm;
Nukleinsäureprobe: pDNA, rRNA (16S/23S);
Gradient des Elutionsmittels: 0 mM - 1200 mM NaCl.

Wie aus Fig. 8 geht aus dem in Fig. 9 abgebildeten Elutionsprofil hervor, dass die Trennwirkung des Anionenaustauscherharzes, sowie die besonders vorteilhafte Elutionsreihenfolge zur pDNA Isolierung auch bei Verwendung als Beschichtung erhalten bleibt.

In Tabelle 4 sind die Elutionseigenschaften eines ausgesuchten Anionenaustauschermaterials in Abhängigkeit vom pH-Wert des Elutionsmittel aufgeführt. Aus der Tabelle geht hervor, dass die gute RNA/pDNA-Trennwirkung des Anionenaustauscherharzes auch bei Variation des pH-Wertes des Elutionsmittel und der eingesetzten Puffersubstanzen erhalten bleibt.

**Tabelle 4:**

| **Harz** | **Vernetzer** | **Porogen** | **Puffer/pH-Wert** | **rRNA (16S/23S)** | **pDNA** | **DNA-RNA** |
|---|---|---|---|---|---|---|
| | | | | **[NaCl]/[M]** | **[NaCl]/[M]** | **[NaC)]/[mM]** |
| QP57-2 | EGDMA* | PEG 4000 | TRIS-Puffer, pH 8,0 | 0,78 | 0,87 | 94,0 |
| QP57-2 | " | PEG 4000 | TRIS-Puffer, pH 7.0 | 0,77 | 0,86 | 97.0 |
| QP57-2 | " | PEG 4000 | Phosphat-Puffer, pH 6,5 | 0,82 | 0,93 | 107,0 |
| QP57-2 | " | PEG 4000 | Phosphat-Puffer, pH 6,0 | 0,84 | 0,94 | 107,0 |

| | | | | | | |
|---|---|---|---|---|---|---|
| * Die in der Tabelle 4 verwendeten Abkürzungen entsprechen denen in Tabelle 1 verwendenten. | | | | | | |

### Beispiel 5:

### 5.1 Präparation von puc21 aus geklärtem Bakterienlysat

Eine LB-Ampicillin-Agar Platte wurde mit puc21 transformierten *Escherichia coli* Bakterien(Stamm: DH5α) (s.o.) ausgestrichen und über einen Zeitraum von ca. 12 Stunden bei 37 °C inkubiert. 5 ml LB-Medium (10g bacto-tryptone; 5g bacto-yeasr extract; 10g NaCl auf 11 dest. H₂O; pH 7,0 (NaOH))wurden unter der Sterilbank mit 5 µl Ampicillinlösung versetzt und mit einer Einzelkolonie beimpft. Diese Vorkultur wurde 7 h bei 37 °C und 200 rpm inkubiert. 500 ml LB-Medium(10g bacto-tryptone; 5g bacto-yeast extract; 10g NaCl auf 11 dest. H₂O; pH 7,0 (NaOH)) in einem 2 1 Schikanekolben wurden mit 500 µl Ampicillin-Lösung und 500 µl Vorkultur versetzt. Die Kultur wurde über einen Zeitraum von ca. 12 Stunden bei 37 °C und 110 rpm inkubiert, danach in einen Zentrifugenbecher überführt und die Bakterien bei 5000 - 6000 U/min für 20 min bei 4 °C sedimentiert:

### Herstellung des geklärten Bakterienlysats:

Das Bakterienpellet wurde in 10 ml des folgenden Puffers suspendiert. Der Puffer enthält 6,06 g Trisbase, 3,72 g EDTA-Dinatriumsalz*2H₂O in 800 ml destillierten Wasser. Der pH-Wert des Puffers wurde mit Salzsäure auf 8,0 eingestellt. Auf 1 l Puffer wurden 100 mg RNase A zugegeben. Zur homogenen Bakterienresuspension wurden 10 ml Lysepuffer zugegeben, gemischt und für 5 min bei Raumtemperatur inkubiert. Der Lysepuffer enthält 8,0 g NaOH in 950 ml destilliertem Wasser sowie 50 ml 20 % Natriumdodecylsulfat. Das Lysat wurde mit 10 ml eisgekühltem Neutralisationspuffer-Lösung versetzt. Der Neutralisationspuffer enthält 294,5 g Kaliumacetat in 500 ml destillierten Wasser. Der pH-Wert wurde mit Eisessig auf 5.5 eingestellt und das Volumen mit destillierten Wasser auf 1 1 ergänzt.

Das anfallende Präzipitat, das genomische DNA, Proteine, Zellbestandteile und Kaliumdodecylsulfatenthält, wurde mittels Filtration (z.B. QIAfilter, QIAGEN GmbH)entfernt. Das erhaltene geklärte Bakterienlysat wurde über Nacht bei 4 °C gelagert.

Vier Leersäulen mit Polypropylenfilterfritten wurden mit jeweils 150 mg einer 32 - 90 µm Fraktion QP66 trocken gepackt. Um bei der Benutzung der Säulen ein Aufwirbeln des Anionenaustauscherharzes zu vermeiden wurde, ohne Druck auf die Partikelschicht auszuüben, eine zweite Polypropylenfilterfritte auf das Anionenaustauscherharz gelegt. Die Säulen wurden in ein Haltegestell gestellt und mit je 1 ml Puffer (800 mM NaCl, 50 mM Morpholinopropansulphonsäure, 15 vol.% EtOH, 0,15 vol.% Triton X-100; pH 7,0) gespült. Nachdem kein Puffer mehr aus den Säulen eluiert werden kann, wurden je 0,9 ml geklärtes Lysat auf die Säulen gegeben. Nachdem die Säulen nicht mehr tropften, wurde mit Puffer (800 mM NaC1, 50 mM Morpholinopropansulphonsäure (MOPS), 15% EtOH; pH 7,0) vier mal mit je 1 ml gewaschen. Die Elution von puc21 Dh5α erfolgte mit je 0,8 ml Puffer (1250 mM NaCl, 50 mM Tris, 15 vol.% Isopropanol; pH 8,5). Die Eluate wurden mit je 0,56 ml Isopropanol versetzt und dann 30 min bei 10.000 rpm in einer Tischzentrifuge zentrifugiert. Der Überstand wurde von der präzipitierten pDNA vorsichtig abdekantiert. Die pDNA wurde dann noch mit 1 ml 70 vol.% Ethanol gewaschen, erneut zentrifugiert, vorsichtig abdekantiert und die gefällte pDNA in je 300 µl Puffer (10mmol TRIS, 1 mmol EDTA, pH 8,0)aufgenommen. Zur Konzentrationsbestimmung wurde die OD (optische Dichte) von 150 µl pDNA in Puffer (10mmol TRIS, 1 mmol EDTA, pH 8,0) in einer Quarzglasküvette bei 260 nm bestimmt (1 OD entspricht einer pDNA Konzentration von 0,05 µg/µl). Die Meßdaten sind in Tabelle 5 aufgelistet.

**Tabelle 5: pDNA-Konzentrationsbestimmung**

| OD | puc21 / [µg/µl] | Gesamtausbeute puc21/[µg] |
|---|---|---|
| 0,499 | 0,0249 | 7,48 |
| 0,496 | 0,0248 | 7,44 |
| 0,501 | 0,0251 | 7,52 |
| 0,487 | 0,0244 | 7,32 |

### 5.2 Präparation von pBR322 aus geklärtem Bakterienlysat

Die Präparation erfolgt analog Beispiel 5.1.
Die Trennung der pDNA von der im Lysat vorhandenen RNA auf einem Agaraosegel ist in Fig. 10 abgebildet.
Die verwendeten Abkürzungen bedeuten:
M: Molekulargewichtsstandard, L: geklärtes Lysat,
W1: 1. Waschschritt, W2: 2. Waschschritt und E: Eluat.

### Beispiel 6:

### Bestimmung der puc21 Bindekapazität

Mit diesem Test wurde die pDNA Bindekapazität bestimmt. Eine bestimmte Menge Anionenaustauscherharz wurde mit einem definierten Volumen pDNA Lösung bekannter Konzentration für eine festgelegte Zeit äquilibriert. Danach wurde das Anionenaustauscherharz quantitativ in eine Leersäule mit Fritte (s.o.) pipettiert. Das Material wurde in der Säule mit Puffer gewaschen und dann die gebundene pDNA mit einem Puffer höherer Salzkonzentration eluiert. Die Konzentration der pDNA wurde photometrisch bei 260 nm bestimmt.

### Durchführung:

Es wurden die Anionenaustauscherharze QP 66; QP66Si; QP66Ti; QP71 und QP71 CIP in Eppendorfgefäßen vorgelegt. 1 ml einer 200 µg (400 µg) pDNA enthaltenden Pufferlösung (10mmol TRISbase, 1 mmol EDTA, pH 8,0)(s.o.) wurde zupipettiert, kurz durchmischt und 5 min am Schüttler äquilibriert (z.B. "End-over-End"-Schüttler). Das Anionenaustauscherharz wurde in eine Leersäule mit Fritte pipettiert und verbliebene Anionenaustauscherharzreste aus dem Eppendorf Gefäß in 0,9 ml Puffer (0,2 M an NaCl, 50 mM MOPS, pH 7.0) aufgenommen und ebenfalls in die Leersäule geben. Alle Säulen wurden mit den verschiedenen Materialien auf die gleiche Füllhöhe aufgefüllt. Aufgrund der unterschiedlichen Schüttdichten der verwendeten Anionenaustauschern ergaben sich dabei, wie in Tabelle 6 aufgeführt, unterschiedliche Materialeinwaagen.
Die Säule wurde mit 1 ml Puffer (46,75 g NaCl, 10,46 g Morpholinopropansulfonsäure(MOPS), 150 ml Isopropanol mit dest. Wasser zu 11 aufgefüllt, pH 7,0) gewaschen und die pDNA mit 1 ml Puffer (73,05 g NaCl, 6,06 g TRIS base, 150 ml iso-Propanol mit dset. Wasser zu 11 aufgefüllt, pH 8,5) eluiert. 250 µl Eluat auf 1 ml, mit Puffer (73,05 g NaCl, 6,06 g TRIS base, 150 ml iso-Propanol mit dest. Wasser zu 11 aufgefüllt, pH 8,5)verdünnt und die optische Dichte (OD) bei 260 nm bestimmen. Im Fall, dass nahezu die gesamte angebotene pDNA Menge von 200 µg adsorbiert wurde, wurde der Test wiederholt und die pDNA Menge verdoppelt.
Alle anderen Anionenaustauscherharze wurden in Mengen eingesetzt, so daß die Füllhöhen in einer Leersäule der Füllhöhe von 50 mg Referenz-Anionenaustauscherharz in der gleichen Säule entsprach.

**Tabelle 6:**

| | Einwaage/ [mg] | 200 µg puc21 | 400 µg puc21 |
|---|---|---|---|
| | | Ausbeute an pDNA | Ausbeute an pDNA |
| QP66 | 20 | 176,7 | 298,5 |
| QP66Si | 70 | 45,4 | 46,4 |
| QP66Ti | 185 | 171,2 | 314,1 |
| QP71 | 19 | 162,1 | 267,4 |
| QP71 CIP | 19 | 162,3 | 269,2 |

### Beispiel 7:

### Bestimmung der dynamischen Bindekapazität:

RNase verdautes, geklärtes Bakterienlysat aus nicht transformierten *Escherichia eoli* (Stamm: DH5α) wurde mit definierten Mengen pDNA versetzt. Auf acht Leersäulen mit QP66 dazu auf identische Füllhöhen gepackt (entspricht 60 mg), wurden je 1,00 ml, 1,05 ml, 1,10 ml und 1,15 ml entsprechend 100-,150-,200- und 250 µg puc21 in geklärtem DH5α Lysat gegeben. Die Säulen wurden mit Puffer gewaschen und die pDNA mit 800 µl Hochsalzpuffer Puffer (1250 mM NaCl, 50 mM Tris, 15 vol.% Isopropanol; pH 8,5) eluiert. Aus einem 200 µl Aliquot des Eluats wurde die pDNA durch Zugabe von 140 µl Isopropanol durch Zentrifugation (10.000 rpm) pelletiert. Das Pellet wurde mit Isopropanol gewaschen und an der Luft getrocknet. Das trockene Pellet wurde in 20 µl Puffer (10mmol TRISbase, 1 mmol EDTA, pH 8,0) gelöst und die OD bei 260 nm bestimmt. Die Ausbeute für das Aliquot wurde auf die Gesamtausbeute pDNA in 900 gl Eluat umgerechnet. Die Meßwerte sind in Tabelle 7 aufgelistet.

**Tabelle 7: Doppelbestimmung der dynamischen Bindekapazität**

| puc21 in geklärtem Lysat / [µg] | Ausbeute pDNA mit QP66 / [µg] |
|---|---|
| 100/1 | 74,6 |
| 100/2 | 72,6 |
| 150/1 | 109,6 |
| 150/2 | 105,6 |
| 200/1 | 135,6 |
| 200/2 | 151,8 |
| 250/1 | 163,7 |
| 250/2 | 166,5 |

### Beispiel 8:

### Bestimmung der Austauscherkapazität ausgewählter Anionenaustauscherharze:

In eine Leersäule mit Polypropylenfrittewurde etwa 100 mg einer 32 - 90 µm Siebfraktion Anionenaustauscherharz gefüllt. Die Partikelschicht wurde mit einer weiteren Polypropylenfritte abgedeckt und ein definiertes Volumen 0,1 M Salzsäure (Menge siehe Tabelle) über die Säule gegeben. Nachdem das aufgetragene Volumen durchgelaufen war, wurde die Säule mit 4 x 500 µl dest. Wasser gespült. Die vereinigten Eluate wurden mit 0,1 M NaOH gegen Neutralrot zurücktitriert. In der folgenden Tabelle 8 sind die Volumina der Normallösungen, die Schüttdichten der Polymere und die daraus abgeleiteten Austauscherkapazitäten in der Einheitmmol/g mmol/ml angegeben.

**Tabelle 8: Bestimmung der Austauscherkapazität**

| Polymer | Einwaage / [mg] | Schüttdichte /[g/ml] | Volumen 0,1 M HCl / [ml] | Verbrauch 0,1 M NaOH / [µl] | Kapazität / [mmol/g] | Kapazität / [mmol/ml] |
|---|---|---|---|---|---|---|
| QP57-2 | 100,0 | 0,157 | 2,5 | 750 | 1,75 | 0,275 |
| QP71-OA | 100,5 | 0,184 | 3,0 | 1525 | 1,52 | 0,280 |
| QP18 | 108,7 | 0,598 | 1,5 | 900 | 0,55 | 0,330 |
| QP66Ti | 253,7 | 1,400 | 1,0 | 500 | 0,20 | 0,280 |
| QP71-A | 109,0 | 0,218 | 2,5 | 650 | 1,51 | 0,330 |
| QP58-1 | 25,2 | 0,139 | 0,5 | 300 | 1,19 | 0,165 |
| QP58-4 | 64,2 | 0,118 | 1,0 | 200 | 1,25 | 0,148 |

## Patentansprüche

1. Anionenaustauscherharz erhältlich durch
Polymerisation von mindestens einem Acrylsäurederivat mit mindestens einem Vemetzer,
wobei das Acrylsäurederivat der allgemeinen Formel (I) entspricht: 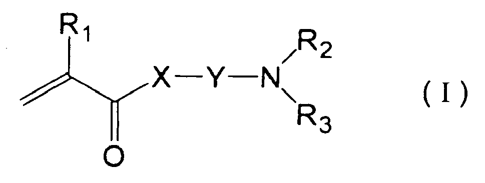 und R₁ Wasserstoff, eine Methyl- oder Ethylgruppe bezeichnet, R₂ und R₃ unabhängig voneinander Wasserstoff, einen C₁-C₃-Alkylrest oder einen hydroxyl-substituierten C₁-C₃₋Alkylrest bezeichnen,
X eine - (NH) -Gruppe oder eine - (NR₄) -Gruppe bezeichnet, und R₄ einen C,-C₃-Alkylrest bezeichnet, und Y eine Gruppe (CH₂)ₘ - (CH₂O)ₙ - bezeichnet, wobei m, n unabhängig voneinander eine ganze Zahl 0, 1, 2, 3, 4, 5 oder 6 bedeuten, m + n >0 ist und einer oder beide der Wasserstoffe der Gruppe Y durch ein C₁-C₃-Alkylrest oder ein Acrylsäurederivat der allgemeinen
Formel (II) ersetzt sein kann: 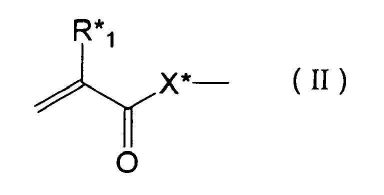 und R*₁ Wasserstoff, eine Methyl- oder Ethylgruppe bezeichnet und
X* Sauerstoff, eine - (NH) -Gruppe bezeichnet,
wobei der Vernetzer der allgemeinen Formel (III) entspricht: 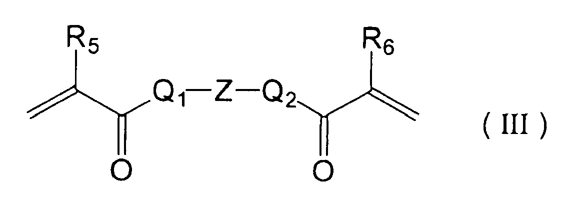 und R₅, R₆ unabhängig voneinander Wasserstoff, eine Methyl- oder Ethylgruppe bezeichnen, und Q₁ und Q₂ Sauerstoff bezeichnen,
und Z eine {[(CH₂)ₒ]-O}ₚ-(CH₂)_{q} Gruppe bezeichnet,
wobei o, p und q unabhängig voneinander eine ganze Zahl 0, 1, 2 oder 3 bedeuten und o + p+ q > 0 gilt, und
mindestens einer der Wasserstoffe in der Gruppe Z unabhängig voneinander durch einen C₁-C₃-Alkylrest oder einen -[(CH₂)ᵣ-O]ₛ-(CH₂)ₜ-NR₈R₉ Rest ausgetauscht sein kann, wobei r, s und t unabhängig voneinander eine ganze Zahl 0, 1, 2, 3, 4, 5 oder 6 bedeuten und r + s + t > 0 ist und R₈, R₉ unabhängig voneinander Wasserstoff, einen C₁-C₃-Alkylrest, oder einen hydroxyl-substituierten C₁-C₃-Alkylrest bezeichnen,
und wobei
die Polymerisation in Gegenwart von 3 bis 35 Gew-% eines Porenbildners durchgeführt wird und wobei der Porenbildner ein aliphatischer Alkohol, verzweigt oder unverzweigt, mit 4 bis 20-C-Atomen, oder eine polymere Verbindung, deren massengemittelte Molekülmasse M_{w} zwischen 200 und 100000 g/mol liegt, und ausgewählt ist aus der Gruppe bestehend aus Polyalkylidenglycolderivaten, Polyethylenimin, Polyvinylpyrollidon und Polystyrol ist.

2. Anionenaustauscherharz gemäß Anspruch 1 **dadurch gekennzeichnet, dass**
das Acrylsäurederivat ausgewählt ist aus der Gruppe bestehend aus N-[3-(N, N-Dimethylarnino)propyl]methacrylamid, N-[3-(N, N-Diethylamino) propyl]methacrylamid, N-[2-(N, N-Dimethylamino)ethyl]methacrylamid und N-[2-(N, N-Diethylamino)ethyl]-methacrylamid.

3. Anionenaustauscherharz gemäß einem der Ansprüche 1 oder 2, **dadurch gekennzeichnet, dass**
der Vernetzer ausgesucht ist aus der Gruppe der Alkylidenglycoldiacrylate oder Dialkylidenglycoldiacrylate, bevorzugt aus der Gruppe bestehend aus Ethylenglycoldimethacrylat, 2, 2 -Dimethyl-1,3-propandioldiacrylat, 2, 2-Dimethyl-1,3-propandioldimethacrylat, Diethylenglycoldiacrylat, Diethylenglycoldimethacrylat, Ethylenglycoldiacrylat, Dipropylenglycoldimethacrylat und 3-(N, N-Dimethylaminopropyl)-1, 2-diacrylat.

4. Anionenaustauscherharz gemäß einem der Ansprüche 1 bis 3, **dadurch gekennzeichnet, dass**
das Acrylsäurederivat N-[3-(N, N-Dimethylamino)propyl]-methacrylamid und der Vernetzer Ethylenglycoldimethacrylat ist.

5. Anionenaustauscherharz gemäß einem der Ansprüche 1 bis 4 **dadurch gekennzeichnet, dass**
der Vernetzer Ethylenglycol-dimethacrylat ist.

6. Anionenaustauscherharz gemäß einem der Ansprüche 1 bis 5, **dadurch gekennzeichnet, dass**
es auf dem Wege einer radikalischen Polymerisation hergestellt wurde.

7. Anionenaustauscherharz gemäß einem der vorhergehenden Ansprüche, **dadurch gekennzeichnet, dass**
bei der radikalen Polymerisation ein protisches oder aprotisches Lösungsmittel verwendet wird, insbesondere Wasser, Methanol, Ethanol, iso-Propanol, Propanol, Ethylenglycol, Ethylenglycol-monoalkylether, Glycerin, Dimethylformamid und/oder Dimethylsulfoxid.

8. Anionenaustauscherharz gemäß Anspruch 7 , **dadurch gekennzeichnet, dass**
die Porenbildner aliphatische, verzweigte oder unverzweigte Alkohole mit 4 bis 20-C-Atomen, bevorzugt 4 bis 16-C-Atomen und besonders bevorzugt 4 bis 8-C-Atome mit einer oder mehreren Hydroxylgruppen, bevorzugt 1-3 Hydroxylgruppe sind.

9. Anionenaustauscherharz gemäß einem der Ansprüche 1 bis 8, **dadurch gekennzeichnet, dass**
der Porenbildner ausgewählt ist aus der Gruppe umfassend
Polyethylenglycol mit M_{w} von 200 bis 10000 g/mol,
Polypropylenglycol M_{w} von 200 bis 10000 g/mol,
Polyethylenglycolmonoalkylether mit M_{w} von 200 bis 5000 g/mol,
Polyethylenglycoldialkylether mit M_{w} von 200 bis 5000 g/mol,
Polyethylenglycolmonoalkylester mit M_{w} von 200 bis 20000 g/mol,
Polyethylenglycoldialkylester mit M_{w} von 200 bis 5000 g/mol,
Polyethylenglycoldisäure mit M_{w} von 1000 bis 20000 g/mol,
Polyethylenimin mit M_{w} von 200 bis 10000 g/mol,
Polyvinylpyrrolidon mit M_{w} von 10000 bis 40000 g/mol oder
Polystyrol mit M_{w} von 200 bis 5000 g/mol.

10. Anionenaustauscherharz gemäß einem der Ansprüche 1 bis 9, **dadurch gekennzeichnet, dass** der Porenbildner Polyethylenglycol mit M_{w} von 1000 bis 6000 g/mol ist.

11. Anionenaustauscherharz gemäß einem der Ansprüche 1 bis 10, **dadurch gekennzeichnet, dass**
das Reaktionsgemisch 0,1 - 100 Gew.-% Acrylsäurederivat, 0 - 95 Gew.-% Vemetzer, 0 - 75 Gew.-% Lösungsmittel und 3 - 35 Gew.-% Porenbilder umfaßt.

12. Anionenaustauscherharz gemäß einem der Ansprüche 1 bis 11, **dadurch gekennzeichnet, dass**
das Reaktionsgemisch 0,1 - 75 Gew.-% Acrylsäurederivat, 0 ― 75 Gew.-% Vemetzer, 0 ― 60 Gew.-% Lösungsmittel und 3 ― 35 Gew.-% Porenbildner umfaßt.

13. Anionenaustauscherharz gemäß einem der Ansprüche 1 bis 12, **dadurch gekennzeichnet, dass**
das Reaktionsgemisch 16,5 Gew.-% Acrylsäurederivat, 13,5 gew.-% Vernetzer, 49 Gew.-% Lösungsmittel und 21 Gew.-% Porenbildner umfaßt.

14. Anionenaustauscherharz gemäß mindestens einem der vorhergehenden Ansprüche, **dadurch gekennzeichnet, dass**
das Anionenaustauscherharz in partikulärer Form mit einem Partikeldurchmesser von 1 bis 10000 um verwendet wird.

15. Anionenaustauscherharz gemäß einem der Ansprüche 1 bis 13, **dadurch gekennzeichnet, dass**
das Anionenaustauscherharz in Form einer Membran eingesetzt wird.

16. Anionenaustauscherharz gemäß einem der Ansprüche 1 bis 13, **dadurch gekennzeichnet, dass**
das Anionenaustauscherharz in Form einer monolithischen Säule verwendet wird.

17. Anionenaustauscherharz gemäß einem der Ansprüche 1 bis 13, **dadurch gekennzeichnet, dass**
das Anionenaustauscherharz als Beschichtung auf einem Trägermaterial aufgebracht ist.

18. Verwendung eines Anionenaustauscherharzes nach einem der Ansprüche 1 bis 17 in einem chromatographischen Verfahren.

19. Verwendung eines Anionenaustauscherharzes gemäß Anspruch 18, **dadurch gekennzeichnet, dass**
das chromatographische Verfahren in einem Reinigungsverfahren, einem analytischen oder präparativen Verfahren erfolgt.

20. Verwendung eines Anionenaustauscherharzes gemäß einem der Ansprüche 18 oder 19, **dadurch gekennzeichnet, dass**
das Anionenaustauscherharz in einem automatisierten Reinigungsverfahren und/oder Isolierungsverfahren und/oder Analyseverfahren eingesetzt wird.

21. Verwendung eines Anionenaustauscherharzes gemäß einem der Ansprüche 18 bis 20, **dadurch gekennzeichnet, dass**
in dem chromatographischen Verfahren Nukleinsäuren aus einem nukleinsäurehaltigen Gemisch getrennt, isoliert, analysiert und/oder gereinigt werden.

22. Verwendung eines Anionenaustauscherharzes gemäß einem der Ansprüche 18 bis 21, **dadurch gekennzeichnet, dass**
das Anionenaustauscherharz zur Isolierung von Plasmid-DNA, vorzugsweise zur Isolierung von p-DNA aus E.coli-Lysaten eingesetzt wird.

23. Verfahren zur Herstellung eines Anionenaustauscherharzes wie definiert in einem der Ansprüche 1 bis 17, **dadurch gekennzeichnet, dass**
es die folgenden Schritte umfaßt:
a.) Gegebenenfalls Entschützen des Acrylsäurederivats und/oder des Vemetzers;
b.) Herstellung der Monomerenmischung;
c.) Zugabe eines Lösungsmittels, eines Porogens und gegebenenfalls eines Radikalstarters;
d.) Entgasung des Reaktionsgemisches; und
e.) Polymerisation bei 60°C über einen Zeitraum von 12 bis 24 h.

24. Verfahren nach Anspruch 23, **dadurch gekennzeichnet, dass**
Anionenaustauscher durch radikalische Polymerisation hergestellt wird.

25. Verfahren nach Anspruch 23, **dadurch gekennzeichnet, dass**
das Anionenaustauscherharz durch Suspensions- oder Emulsionspolymerisation hergestellt wird.

26. Verfahren nach Anspruch 24, **dadurch gekennzeichnet, dass**
4-20 Gew.-% an Acrylsäurederivat, 10-23 Gew.-% an Vernetzer, 3 - 60 Gew.-% an Lösungsmittel und 5-35 Gew.-% an Porenbildner eingesetzt werden, die Reaktionstemperatur 50°-80°C beträgt, der Start der radikalischen Poymerisation durch 2,2' - Azobisisobutyronitril (AIBN) und/oder Benzoylperoxid (BPO) und/oder Isopropanoylperoxid (IPPO) und/oder Natrium-, Kalium- oder Ammoniumperoxodisulfat oder durch UV-Strahlung oder γ-Strahlung initiiert wird und die Reaktionsdauer 12 - 28 h beträgt.

27. Verfahren zur Herstellung eines Anionenaustauscherharzes wie definiert in Anspruch 17, **dadurch gekennzeichnet, dass**
es die folgenden Schritte umfaßt:
a.) Gegebenenfalls beladen der Trägerpartikel mit Radikalstarter;
b.) Zugabe des Acrylsäurederivats und des Vernetzers, des Porogens und des Lösungsmittels;
c.) Durchmischung des Reaktionsgemisches;
d.) Entfernung des überschüssigen Reaktionsgemisches von den Trägerpartikeln;
e.) Polymerisation bei 60°C, über einen Zeitraum von 12 bis 24 h; und
f.) Waschen des beschichteten Trägermaterials.

## Claims

1. An anion-exchange resin obtainable by the process of:
Polymerizing at least one acrylic acid derivative together with at least one cross-linking agent,
wherein the acrylic acid derivative corresponds to the general formula (I): 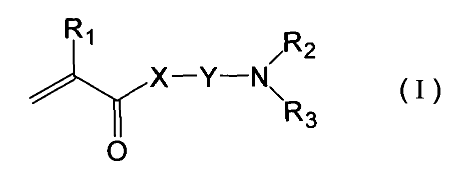 and wherein R₁ represents a hydrogen, methyl- or ethyl group,
R₂ and R₃, independently, represent hydrogen, a C₁-C₃- alkyl group or a hydroxyl-substituted C₁-C₃- alkyl group, X represents a -(NH)- group or a -(NR₄)- group,
wherein R₄ represents a C₁-C₃- alkyl group, and Y represents a (CH₂)ₘ - (CH₂O)ₙ₋group, wherein m and n, independently, represent the whole numbers 0, 1,2, 3, 4, 5 or 6, wherein m + n > 0 and wherein one or both of the hydrogens of the Y group is optionally replaced by a C₁-C₃-alkyl group or an acrylic acid derivative of the general formula (II): 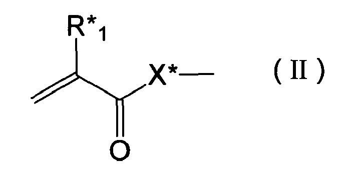 and wherein R*₁ represents hydrogen, a methyl or ethyl group, and
X* represents oxygen or a -(NH)- group, and wherein the cross-linking agent corresponds to the general formula (III): 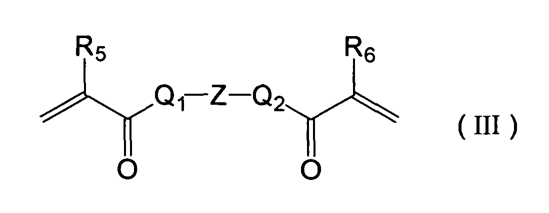 wherein R₅ and R₆, independently, represent hydrogen, a methyl- or ethyl group, and Q₁ and Q₂ represent oxygen, and
Z represents a {[(CH₂)ₒ]-O}ₚ-(CH₂)_{q} group, wherein o, p and q, independently, represent whole numbers 0, 1, 2 or 3, wherein o + p + q > 0, and wherein at least one hydrogen atom in the Z group can be optionally, independently, replaced by a C₁-C₃₋alkyl group or a-[(CH₂)ᵣ-O]ₛ-(CH₂)ₜ-NR₈R₉ group, wherein r, s and t, independently represent the whole number 0, 1, 2, 3, 4, 5 or 6, wherein r + s + t > 0, and R₈ and R₉, independently, represent hydrogen, a C₁-C₃- alkyl group or a hydroxyl-substituted C₁₋C₃- alkyl group, and
wherein the polymerization is carried out in the presence of 3 to 35 % by weight of a pore-promoting agent, and wherein the pore-promoting agent is an aliphatic alcohol, branched or un-branched, having 4 to 20 carbon atoms; or the pore-promoting agent is a polymeric compound whose mean molar molecular weight (M_{w}) lies between 200 and 100000 g/mol, and is selected from the group consisting of polyalkylidene-glycol derivatives, polyethylene-imine, polyvinyl-pyrollidone and polystyrene.

2. The anion-exchange resin according to Claim 1, **characterized in that** the acrylic acid derivative is selected from the group consisting of N-[3-(N,N-dimethylamino)-propyl] methacrylamide, N-[3-(N,N-diethylamino)-propyl] methacrylamide, N-[2-(N,N-dimethylamino)-ethyl] methacrylamide and N-[2-(N,N-diethylamino)-ethyl) methacrylamide.

3. The anion-exchange resin according to Claim 1 or 2, **characterized in that** the cross-linking agent is selected from the group consisting of alkylidene-glycol diacrylates and dialkylidene-glycol diacrylates, and preferably from the group consisting of ethylene-glycol dimethacrylate, 2,2-dimethyl-1,3-propanediol diacrylate, 2,2-dimethyl-1,3-propanediol dimethacrylate, diethylene-glycol diacrylate, diethylene-glycol dimethacrylate, ethylene-glycol diacrylate, dipropylene-glycol dimethacrylate and 3-(N,N-dimethylamino-propyl)- 1,2-diacrylate.

4. The anion-exchange resin, according to any one of the Claims 1 to 3, **characterized in that** the acrylic acid derivative is N-[3-(N,N-dimethylamino)- propyl]- methacrylamide and the cross-linking agent is ethylene-glycol dimethacrylate.

5. The anion-exchange resin according to any one of the Claims 1 to 4, **characterized in that** the cross-linking agent is ethylene-glycol dimethacrylate.

6. The anion-exchange resin according to any one of the Claims 1 to 5, **characterized in that** the resin is produced by way of radical polymerization.

7. The anion-exchange resin according to any one of the preceding Claims, **characterized in that** a protic or aprotic solvent is used in the radical polymerization, especially water, methanol, ethanol, iso-propanol, propanol, ethylene-glycol, ethylene-glycol-monoalkyl-ether, glycerine, dimethyl formamide and /or dimethyl sulphoxide

8. The anion-exchange resin according to Claim 7, **characterized in that** the pore-promoting agent is an aliphatic alcohol, branched or un-branched, having 4 to 20 carbon atoms, preferably 4 to 16 carbon atoms and most preferred 4 to 8 carbon atoms with one or more hydroxyl groups, preferably 1 to 3 hydroxyl groups.

9. The anion-exchange resin according to any one of the Claims 1 to 8, **characterized in that** the pore-promoting agent is selected from the group consisting of:
Polyethylene glycol having an M_{w} of between 200 to 10.000 g/mol,
Polypropylene glycol having an M_{w} of between 200 to 10.000 g/mol,
Polyethylene-glycol monoalkyl ether having an M_{w} of between 200 to 5000 g/mol,
Polyethylene-glycol dialkyl ether having an M_{w} of between 200 to 5000 g/mol,
Polyethylene-glycol monoalkyl ester having an M_{w} of between 200 to 20.000 g/mol,
Polyethylene-glycol dialkyl ester having an M_{w} of between 200 to 5000 g/mol,
Polyethylene-glycol diacid having an M_{w} of between 1000 to 20.000 g/mol,
Polyethylene-imine having an M_{w} of between 200 to 10.000 g/mol,
Polyvinyl-pyrrolidone having an M_{w} of between 10.000 to 40.000 g/mol, and
Polystyrene having an M_{w} of between 200 to 5000 g/mol.

10. The anion-exchange resin according to any one of the Claims 1 to 9, **characterized in that** the pore-promoting agent is polyethylene glycol and has an M_{w} of between 1000 to 6000 g/mol.

11. The anion-exchange resin according to any one of the Claims 1 to 10, **characterized in that** the reaction mixture comprises
0,1 to 100 % by weight acrylic acid derivative, 0 to 95 % by weight cross-linking agent, 0 to 75 % by weight solvent, and 3 to 35 % by weight pore-promoting agent.

12. The anion-exchange resin according to any one of the Claims 1 to 11, **characterized in that** the reaction mixture comprises
0,1 to 75 % by weight acrylic acid derivative, 0 to 75 % by weight cross-linking agent, 0 to 60 % by weight solvent, and 3 to 35 % by weight pore-promoting agent.

13. The anion-exchange resin according to any one of the Claims 1 to 12, **characterized in that** the reaction mixture comprises
16,5 % by weight acrylic acid derivative, 13,5 % by weight cross-linking agent, 49 % by weight solvent, and 21 % by weight pore-promoting agent.

14. The anion-exchange resin according to any one of the preceding Claims, **characterized in that** the anion-exchange resin is used in particle form having a particle diameter of between 1 to 10.000 µm.

15. The anion-exchange resin according to any one of the Claims 1 to 13, **characterized in that** the anion-exchange resin is used in a membrane form.

16. The anion-exchange resin according to any one of the Claims 1 to 13, **characterized in that** the anion-exchange resin is used in a monolithic column form.

17. The anion-exchange resin according to any one of the Claims 1 to 13, **characterized in that** the anion-exchange resin is coated as a coating on a carrier material.

18. Use of an anion-exchange resin according to any one of the Claims 1 to 17 in a chromatographic method.

19. Use of an anion-exchange resin according to Claim 18, **characterized in that** the chromatographic method is employed in a purification method, an analytical or preparative method.

20. Use of an anion-exchange resin according to any one of the Claims 18 or 19, **characterized in that** the anion-exchange resin is employed in an automated purification method, and/or isolation method and/or analytical method.

21. Use of an anion-exchange resin according to any one of the Claims 18 to 20, **characterized in that** in the chromatographic method nucleic acids are separated, isolated, analyzed and/or purified from a nucleic acid containing mixture.

22. Use of an anion-exchange resin according to any one of the Claims 18 to 21, **characterized in that** the anion-exchange resin is used for the isolation of plasmid-DNA, preferably the isolation of p-DNA from E.coli lysates.

23. A method for the production of an anion-exchange resin as defmed in any one of the Claims 1 to 17, **characterized in** comprising the following steps:
a. Optionally removing the protective group from the acrylic acid derivative and/or the cross-linking agent;
b. Production of the monomer mixture
c. Addition of a solvent, a pore promoting agent and optionally a radical initiator;
d. Degassing the reaction mixture
e. Polymerization at 60°C over a period of 12 to 24 h.

24. A method according to Claim 23, **characterized in that** the anion-exchange resin is produced by way of radical polymerization.

25. A method according to Claim 23, **characterized in that** the anion-exchange resin is produced by way of suspension or emulsion polymerization.

26. A method according to Claim 24, **characterized in that** 4 to 20 % by weight acrylic acid derivative, 10 to 23 % by weight cross-linking agent, 3 to 60 % by weight solvent and 5 to 35 % by weight pore-promoting agent are employed, the reaction temperature is 50°-80°C, the start of the radical polymerization is initiated with 2-2'- azo- bis-isobutyrylnitrile (AIBN), benzoyl peroxide (BPO) and/or isopropanoyl peroxide (IPPO) and/or sodium -, potassium - or ammonium peroxodisulphate or with UV-radiation or γ-radiation and the reaction time is 12 to 28 h.

27. A method for the production of an anion-exchange resin as defmed in Claim 17, **characterized in** comprising the following steps:
a. Optionally coating of the carrier particles with the radical initiator;
b. Addition of the acrylic acid derivative and the cross-linking agent, the pore promoting agent and the solvent;
c. Mixing the reaction mixture
d. Removing of the excess reaction mixture from the carrier particles
e. Polymerization at 60°C over a period of 12 to 24 h.
f. Washing of the coated carrier material.

## Revendications

1. Résine échangeuse d'anions pouvant être obtenue par
polymérisation d'au moins un dérivé d'acide acrylique avec au moins un réticulant,
le dérivé d'acide acrylique correspondant à la formule générale (I) 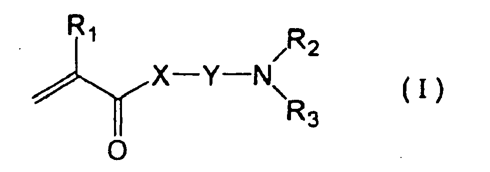 et R₁ désignant un atome d'hydrogène, un groupe méthyle ou éthyle, R₂ et R₃, indépendamment l'un de l'autre, désignant un atome d'hydrogène, un radical alkyle en C₁ à C₃ ou un radical alkyle en C₁à C₃ substitué par un groupe hydroxyle,
X représentant un groupe -(NH) ou -(NR₄), et R₄ représentant un radical alkyle en C₁ à C₃, et Y un groupe (CH₂)ₘ-(CH₂O)ₙ, m et n, indépendamment l'un de l'autre, représentant un nombre entier 0, 1, 2, 3, 4, 5 ou 6, m + n étant > 0 et un ou les deux atomes d'hydrogène du groupe Y pouvant être remplacé(s) par un radical alkyle en C₁ à C₃ ou un dérivé d'acide acrylique de formule générale (II) : 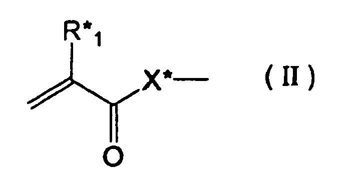 et R*₁ désignant un atome d'hydrogène, un groupe méthyle ou éthyle et
X* désignant un atome d'oxygène, un groupe ―(NH),
l'agent réticulant correspondant à la formule générale (III) : 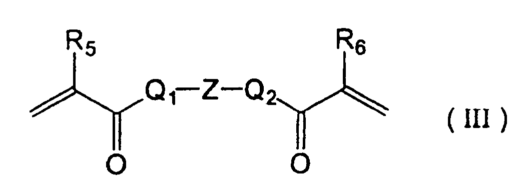 et R₅, R₆, indépendamment l'un de l'autre, désignant un atome d'hydrogène, un groupe méthyle ou éthyle,
et Q₁ et Q₂ un atome d'hydrogène,
et Z un groupe {[(CH₂)ₒ]-O}ₚ-(CH₂)_{q},
o, p et q, indépendamment l'un de l'autre, représentant un nombre entier 0, 1, 2 ou 3
et o + p + q étant > 0, et
au moins un des atomes d'hydrogène dans le groupe Z, indépendamment l'un de l'autre, pouvant être remplacé par un radical alkyle en C₁ à C₃ ou un radical -[(CH₂)ᵣ₋O]ₛ-(CH₂)ₜ-NR₈R₉, r, s et t, indépendamment l'un de l'autre, représentant un nombre entier 0, 1, 2, 3, 4, 5 ou 6 et r + s + t étant > 0 et R₈, R₉, indépendamment l'un de l'autre, désignant un atome d'hydrogène, un radical alkyle en C₁ à C₃, ou un radical alkyle en C₁ à C₃ substitué par un groupe hydroxyle, et
la polymérisation étant réalisée en présence de 3 à 35 % en poids d'un agent porogène et l'agent porogène étant un alcool aliphatique, ramifié ou non ramifié, comportant 4 à 20 atomes de C, ou un composé polymère dont la masse moléculaire, en moyenne massique, M_{w} est compris entre 200 et 100000 g/mole, et choisi dans le groupe constitué de dérivés de polyalkylidène glycol, de polyéthylèneimine, de polyvinylpyrrolidone, et de polystyrène.

2. Résine échangeuse d'anions selon la revendication 1, **caractérisée en ce que** le dérivé d'acide acrylique est choisi dans le groupe constitué de N-[3-(N,N-diméthylamino)propyl]méthacrylamide, de N-[3-(N,N-diéthylamino)propyl]méthacrylamide, de N-[2-(N,N-diméthylamino)éthyl]-méthacrylamide et de N-[2-(N,N-diéthylamino)éthyl]-métha-crylamide.

3. Résine échangeuse d'anions selon l'une quelconque des revendications 1 ou 2
**caractérisée en ce que**
l'agent réticulant est sélectionné dans le groupe des diacrylates d'alkylidène glycol ou des diacrylates de dialkylidène glycol, de préférence dans le groupe constitué de diméthacrylate d'éthylène glycol, de diacrylate de 2,2-diméthyl-1,3-propane diol, de diméthacrylate de 2,2-diméthyl-1,3-propane diol, de diacrylate de diéthylène glycol, de diméthacrylate de diéthylène glycol, de diacrylate d'éthylène glycol, de diméthacrylate de dipropylène glycol et de 1,2-diacrylate de 3-(N,N-diméthylaminopropyle).

4. Résine échangeuse d'anions selon l'une quelconque des revendications 1 à 3,
**caractérisée en ce que**
le dérivé d'acide acrylique méthacrylamide de N-[3-(N,N-diméthylamino)propyle] et l'agent réticulant sont du diméthacrylate d'éthylène glycol.

5. Résine échangeuse d'anions selon l'une quelconque des revendications 1 à 4,
**caractérisée en ce que**
l'agent réticulant est du diméthacrylate d'éthylène glycol.

6. Résine échangeuse d'anions selon l'une quelconque des revendications 1 à 5,
**caractérisée en ce qu'**
elle a été fabriquée par polymérisation radicalaire.

7. Résine échangeuse d'anions selon l'une quelconque des revendications précédentes, **caractérisée en ce que**
lors de la polymérisation radicalaire, on utilise un solvant protique ou aprotique, en particulier de l'eau, du méthanol, de l'éthanol, de l'isopropanol, du propanol, de l'éthylène glycol, de l'éther monoalkylique d'éthylène glycol, du glycérol, du formamide de diméthyle et/ou du sulfoxyde de diméthyle.

8. Résine échangeuse d'anions selon la revendication 7, **caractérisée en ce que** les agents porogènes sont des alcools aliphatiques, ramifiés ou non ramifiés, comportant de 4 à 20 atomes de C, de préférence de 4 à 16 atomes de C et de manière particulièrement préférée de 4 à 8 atomes de C comportant un ou plusieurs groupes hydroxyle, de préférence 1 à 3 groupes hydroxyle.

9. Résine échangeuse d'anions selon l'une quelconque des revendications 1 à 8,
**caractérisée en ce qu'**
on choisit l'agent porogène dans le groupe comprenant
le polyéthylène glycol d'un M_{w} de 200 à 10000 g/mole,
le polypropylène glycol d'un M_{w} de 200 à 10000 g/mole,
l'éther monoalkylique de polyéthylène glycol d'un M_{w} de 200 à 5000 g/mole,
l'éther dialkylique de polyéthylène glycol d'un M_{w} de 200 à 5000 g/mole,
l'ester monoalkylique de polyéthylène glycol d'un M_{w} de 200 à 20000 g/mole,
l'ester dialkylique de polyéthylène glycol d'un M_{w} de 200 à 5000 g/mole,
le diacide de polyéthylène glycol d'un M_{w} de 1000 à 20000 g/mole,
la polyéthylèneimine d'un M_{w} de 200 à 10000 g/mole,
la polyvinylpyrrolidone d'un M_{w} de 10000 à 40000 g/mole ou
le polystyrène d'un M_{w} de 200 à 5000 g/mole.

10. Résine échangeuse d'anions selon l'une quelconque des revendications 1 à 9,
**caractérisée en ce que** l'agent porogène est du polyéthylène glycol d'un M_{w} de 1000 à 6000 g/mole.

11. Résine échangeuse d'anions selon l'une quelconque des revendications 1 à 10,
**caractérisée en ce que**
le mélange réactionnel renferme de 0,1 à 100 % en poids de dérivé d'acide acrylique, de 0 à 95 % en poids d'agent réticulant, de 0 à 75 % en poids de solvant et de 3 à 35 % en poids d'agent porogène.

12. Résine échangeuse d'anions selon l'une quelconque des revendications 1 à 11,
**caractérisée en ce que**
le mélange réactionnel renferme de 0,1 à 75 % en poids de dérivé d'acide acrylique, de 0 à 75 % en poids d'agent réticulant, de 0 à 60 % en poids de solvant et de 3 à 35 % en poids d'agent porogène.

13. Résine échangeuse d'anions selon l'une quelconque des revendications 1 à 12,
**caractérisée en ce que**
le mélange réactionnel renferme 16,5 % en poids de dérivé d'acide acrylique, 13,5 % en poids d'agent réticulant, 49 % en poids de solvant et 21 % en poids d'agent porogène.

14. Résine échangeuse d'anions selon au moins l'une quelconque des revendications précédentes,
**caractérisée en ce qu'**
on l'utilise sous forme particulaire avec un diamètre de particule de 1 à 10000 µm.

15. Résine échangeuse d'anions selon l'une quelconque des revendications 1 à 13,
**caractérisée en ce qu'**
on l'utilise sous forme de membrane.

16. Résine échangeuse d'anions selon l'une quelconque des revendications 1 à 13,
**caractérisée en ce qu'**
on l'utilise sous forme de colonne monolithique.

17. Résine échangeuse d'anions selon l'une quelconque des revendications 1 à 13,
**caractérisée en ce qu'**
on l'applique, en tant que revêtement, sur une matière support.

18. Utilisation d'une résine échangeuse d'anions selon l'une quelconque des revendications 1 à 7 dans un procédé chromatographique.

19. Utilisation d'une résine échangeuse d'anions selon la revendication 18,
**caractérisée en ce que**
le procédé chromatographique est réalisé dans un procédé de purification, un procédé analytique ou préparatif.

20. Utilisation d'une résine échangeuse d'anions selon l'une quelconque des revendications 18 ou 19,
**caractérisée en ce qu'**
on l'utilise dans un procédé de purification automatisé et/ou un procédé d'isolation et/ou un procédé d'analyse.

21. Utilisation d'une résine échangeuse d'anions selon l'une quelconque des revendications 18 à 20,
**caractérisée en ce que**
dans le procédé chromatographique, on sépare, on isole, on analyse et/ou on purifie des acides nucléiques à partir d'un mélange contenant des acides nucléiques.

22. Utilisation d'une résine échangeuse d'anions selon l'une quelconque des revendications 18 à 21,
**caractérisée en ce qu'**
on utilise la résine échangeuse d'anions pour isoler l'ADN de plasmide, de préférence pour isoler le p-ADN de lysats de E. coli.

23. Procédé de fabrication d'une résine échangeuse d'anions comme définie dans l'une quelconque des revendications 1 à 17, **caractérisé en ce qu'**
il comporte les étapes suivantes :
a.) Le cas échéant, déprotection du dérivé d'acide acrylique et/ou de l'agent réticulant ;
b.) Préparation du mélange de monomères ;
c.) Addition d'un solvant, d'un porogène et, le cas échéant, d'un amorceur radicalaire ;
d.) Dégazage du mélange réactionnel ; et
e.) Polymérisation à 60°C pendant une période de 12 à 14 h.

24. Procédé selon la revendication 23, **caractérisé en ce qu'**
on produit des échangeurs d'anions par polymérisation radicalaire.

25. Procédé selon la revendication 23, **caractérisé en ce qu'**
on fabrique la résine échangeuse d'anions par polymérisation en suspension ou en émulsion.

26. Procédé selon la revendication 24, **caractérisé en ce qu'**
on utilise 4 à 20 % en poids de dérivé d'acide acrylique, 10 à 23 % en poids de réticulant, 3 à 60 % en poids de solvant et 5 à 35 % en poids d'agent porogène, la température de réaction est de 50 à 80°C, le démarrage de la polymérisation radicalaire est initié par du 2,2'-azobisisobutyronitrile (AEBN) et/ou du peroxyde de benzoyle (BPO) et/ou du peroxyde d'isopropanoyle (IPPO) et/ou du peroxodisulfate de sodium, de potassium ou d'ammonium ou par rayonnement UV ou rayonnement γ et la durée de la réaction est de 12 à 28 h.

27. Procédé de fabrication d'une résine échangeuse d'anions telle que définie dans la revendication 17, **caractérisée en ce qu'** il comporte les étapes suivantes :
a.) Le cas échéant, chargement des particules supports en amorceur radicalaire ;
b.) Addition du dérivé d'acide acrylique et du réticulant, du porogène et du solvant ;
c.) Mélange intime du mélange réactionnel ;
d.) Elimination du mélange réactionnel excédentaire des particules supports ;
e.) Polymérisation à 60°C, pendant une période de 12 à 24 h ; et
f.) Lavage du matériel support revêtu.
